(19) Europäisches Patentamt / European Patent Office / Office européen des brevets

(11) **EP 4 778 722 A1**

(12) **EUROPEAN PATENT APPLICATION**
published in accordance with Art. 153(4) EPC

(43) Date of publication:
**22.07.2026 Bulletin 2026/30**

(21) Application number: **24872453.6**

(22) Date of filing: **26.09.2024**

(51) International Patent Classification (IPC):
**B32B 27/32** (2006.01)     **B32B 27/00** (2006.01)
**B65D 33/00** (2006.01)     **B65D 65/40** (2006.01)
**C08J 7/043** (2020.01)     **C08L 23/06** (2006.01)
**C08L 23/16** (2006.01)

(52) Cooperative Patent Classification (CPC):
**C08J 7/043; B32B 27/00; B32B 27/32;**
**B65D 65/40; C08J 7/042;** C08J 2323/12;
C08J 2323/16; C08J 2423/12; C08J 2475/04

(86) International application number:
**PCT/JP2024/034534**

(87) International publication number:
**WO 2025/070669 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 27.09.2023  JP 2023166474
              28.09.2023  JP 2023167754
              30.10.2023  JP 2023186013

(71) Applicant: **Dai Nippon Printing Co., Ltd.**
**Tokyo 162-8001 (JP)**

(72) Inventors:
• **ISHIKAWA Shun**
  **Tokyo 162-8001 (JP)**
• **HASEGAWA Takayuki**
  **Tokyo 162-8001 (JP)**

• **KONO Shinichiro**
  **Tokyo 162-8001 (JP)**
• **NAKATA Mariko**
  **Tokyo 162-8001 (JP)**
• **MORIMOTO Taro**
  **Tokyo 162-8001 (JP)**
• **KOICHI Chisayo**
  **Tokyo 162-8001 (JP)**
• **ONO Yoshiyuki**
  **Tokyo 162-8001 (JP)**
• **TAKUSHIMA Kazuhiro**
  **Tokyo 162-8001 (JP)**
• **SHIMIZU Reiko**
  **Tokyo 162-8001 (JP)**

(74) Representative: **Müller-Boré & Partner**
**Patentanwälte PartG mbB**
**Friedenheimer Brücke 21**
**80639 München (DE)**

(54) **SEALANT FILM FOR LAMINATE, LAMINATE, PACKAGING CONTAINER, AND HEAT STERILIZATION POUCH**

(57)    A sealant film for laminates that is superior in impact resistance after retort treatment and that is suitable for laminates monomaterialized with polypropylene is provided. Being a sealant film for use in laminates in which the percentage of polypropylene to the total amount of resin materials is 80% by mass or more, the sealant film for laminates contains polypropylene, polyethylene, and ethylene-propylene rubber. The percentage of the polypropylene to the total amount of the sealant film is 40% by mass or more, and the sealant film has a composite modulus of elasticity as measured by nanoindentation of 500 MPa or more and 900 MPa or less.

Fig. 1

**Description**

Cross-Reference to Related Applications

The present application claims priority based on Patent Application No. 2023-166474, filed September 27, 2023, in Japan, Patent Application No. 2023-167754, filed September 28, 2023, in Japan, and Patent Application No. 2023-186013, filed October 30, 2023, in Japan, the disclosure of which is hereby incorporated as part of the present description by reference in their entirety.

Technical Field

The present invention relates to a sealant film for laminates, a laminate, a packaging container, and a heat sterilization pouch.

Background Art

In the related art, packaging containers have been composed of laminates in which a polyester film, superior in strength and heat resistance, or a nylon film, superior in impact resistance, for example, is used as a base material, and a polyolefin film, superior in heat sealability, is used as a sealant film. With the growing call for building a recycling-oriented society in recent years, however, there is a need for packaging containers having high recycling suitability. Nevertheless, known packaging containers, composed of different types of resin materials, are difficult to separate into the individual resin materials.

To address this, researchers have been studying monomaterialization with polypropylene (e.g., PTL 1) from the perspective of monomaterialization for easier recycling. In PTL 1, a laminate for use in packaging materials, for example for packaging containers, is disclosed in which a stretched base material containing polypropylene is used as a base material instead of a polyester film or nylon film and is combined with a sealant film containing polypropylene. With this laminate, recycling suitability has been improved by virtue of the base material and the sealant film being both composed of polypropylene.

Citation List

Patent Literature

PTL 1: Japanese Unexamined Patent Application Publication No. 2021-020391

Summary of Invention

Technical Problem

Meanwhile, when a laminate for use in packaging containers is made into a packaging container, such as a retort pouch, the laminate is required to have resistance to fall impact (impact resistance) sufficient to withstand impact from a fall of the pouch after the retort treatment, and hand tearability (easy-openability) that allows the pouch to be easily torn by hand after the retort treatment. With laminates monomaterialized with polypropylene, however, impact resistance and openability after retort treatment have been insufficient in some cases.

One of the problems to be solved by the present disclosure is to provide a sealant film for laminates that is superior in impact resistance and openability after retort treatment and that is suitable for laminates monomaterialized with polypropylene.

Solution to Problem

A sealant film for a laminate according to the present disclosure is a sealant film for use in a laminate in which a percentage of polypropylene to a total amount of resin materials is 80% by mass or more, the sealant film containing polypropylene, polyethylene, and ethylene-propylene rubber, wherein a percentage of the polypropylene to a total amount of the sealant film is 40% by mass or more, and the sealant film has a composite modulus of elasticity as measured by nanoindentation of 500 MPa or more and 900 MPa or less.

According to the present disclosure, a sealant film for laminates that is superior in impact resistance and openability after retort treatment and that is suitable for laminates monomaterialized with polypropylene can be provided.

Brief Description of Drawings

[Fig. 1] Fig. 1 is a cross-sectional schematic view illustrating an embodiment of a sealant film for laminates.

[Fig. 2] Fig. 2 is a cross-sectional schematic view illustrating an embodiment of a sealant film for laminates.

[Fig. 3] Fig. 3 is a schematic cross-sectional view illustrating an embodiment of a laminate.

[Fig. 4] Fig. 4 is a schematic cross-sectional view illustrating an embodiment of a laminate.

[Fig. 5] Fig. 5 is a schematic cross-sectional view illustrating an embodiment of a laminate.

[Fig. 6] Fig. 6 is a schematic cross-sectional view illustrating an embodiment of a laminate.

[Fig. 7] Fig. 7 is a schematic cross-sectional view illustrating an embodiment of a laminate.

[Fig. 8] Fig. 8 is a schematic cross-sectional view illustrating an embodiment of a laminate.

[Fig. 9] Fig. 9 is a schematic cross-sectional view illustrating an embodiment of a laminate.

[Fig. 10] Fig. 10 is a schematic cross-sectional view illustrating an embodiment of a laminate.

[Fig. 11] Fig. 11 is a schematic cross-sectional view illustrating an embodiment of a laminate.

[Fig. 12] Fig. 12 is a schematic cross-sectional view illustrating an embodiment of a laminate.

[Fig. 13] Fig. 13 is a schematic cross-sectional view illustrating an embodiment of a laminate.

[Fig. 14] Fig. 14 is a schematic cross-sectional view illustrating an embodiment of a laminate.

[Fig. 15] Fig. 15 is a schematic cross-sectional view illustrating an embodiment of a laminate.

[Fig. 16] Fig. 16 is a schematic cross-sectional view illustrating an embodiment of a laminate.

[Fig. 17] Fig. 17 is a schematic cross-sectional view illustrating an embodiment of a laminate.

[Fig. 18] Fig. 18 is a schematic cross-sectional view illustrating an embodiment of a laminate.

[Fig. 19] Fig. 19 is a schematic cross-sectional view illustrating an embodiment of a laminate.

[Fig. 20] Fig. 20 is a schematic cross-sectional view illustrating an embodiment of a laminate.

[Fig. 21] Fig. 21 is a front view illustrating an embodiment of a packaging container.

[Fig. 22] Fig. 22 is a perspective view illustrating an embodiment of a packaging container.

[Fig. 23] Fig. 23 illustrates the results of a composition analysis of a sealant film in the Examples.

Description of Embodiments

Embodiments of the present disclosure will now be described in detail. The present disclosure can be implemented in numerous different forms and is not to be construed as limited to the descriptions in the embodiments illustrated below. The drawings may be presented schematically, for example in terms of the width, thickness, and shape of layers, compared to the embodiments to make the descriptions clearer, but they are merely examples and do not limit the interpretation of the present disclosure. In the present description and drawings, elements similar to those already described in relation to a previously mentioned drawing may be assigned the same reference signs, and their detailed descriptions may be omitted as appropriate.

When multiple candidate upper limits and multiple candidate lower limits are listed for a certain parameter in the present disclosure, the numerical range of that parameter may be constituted by pairing any one candidate upper limit with any one candidate lower limit. Examples of such parameters include physical characteristics, percentages of components, and thicknesses of layers. As an example, the following statement is described: "Parameter B is preferably A1 or more, more preferably A2 or more, further preferably A3 or more. Parameter B is preferably A4 or less, more preferably A5 or less, further preferably A6 or less." In this example, the numerical range of parameter B may be from A1 to A4, both inclusive, may be from A1 to A5, both inclusive, may be from A1 to A6, both inclusive, may be from A2 to A4, both inclusive, may be from A2 to A5, both inclusive, may be from A2 to A6, both inclusive, may be from A3 to A4, both inclusive, may be from A3 to A5, both inclusive, or may be from A3 to A6, both inclusive.

As used herein, the "main component" in a given layer or base material refers to the component whose percentage in that layer or base material is more than 50% by mass, preferably 60% by mass or more, more preferably 70% by mass or more, further preferably 80% by mass or more.

In each category of components that appear in the following description (e.g., polypropylene, $\alpha$-olefins, resin materials, additives, adhesive resins, inorganic oxides, gas barrier resins, propylene-ethylene block copolymers, thermoplastic elastomers, and polyethylene), one component in that category may be used, or two or more may be used.

[Sealant Film for Laminates]

A sealant film for laminates according to the present disclosure contains polypropylene constituting 40% by mass or more relative to the total amount of the sealant film, polyethylene, and ethylene-propylene rubber. A laminate including such a sealant film for laminates as its sealant layer is superior in resistance to fall impact (impact resistance), with which the laminate withstands impact from a fall of a pouch after retort treatment, and hand tearability (openability), which allows the pouch to be easily torn by hand after retort treatment.

The sealant film for laminates may have a single-layer structure or may have a multilayer structure.

The sealant film for laminates according to the present disclosure has, in an embodiment, a single-layer structure.

The sealant film for laminates according to the present disclosure has, in an embodiment, a two-layer structure composed of a first layer that serves as a seal surface when the sealant film is used in a laminate, and a second layer that serves as a core layer.

The sealant film for laminates according to the present disclosure has, in an embodiment, a three-layer structure composed of a first layer that serves as a seal layer when the sealant film is used in a laminate, a second layer that serves as a core layer, and a third layer that serves as a surface layer, which is positioned closer to an adhesive agent layer.

The sealant film for laminates according to the present disclosure is suitable for use in laminates in which the percentage of polypropylene relative to the total amount of resin materials is 80% by mass or more.

<Single-Layer Structure>

A sealant film for laminates according to the present disclosure in a single-layer structure (hereinafter also referred to simply as "single-layer sealant film") contains at least one type of polypropylene as a matrix resin component.

The polypropylene contained in the single-layer sealant film may be any of homopolypropylene, random polypropylene, or block polypropylene or may be a mixture of two or more selected from these. The polypropylene may be biomass-derived polypropylene and/or recycled polypropylene. Homopolypropylene is a polymer solely composed of propylene. Random polypropylene is a random polypropylene composed of propylene and monomer(s) such as an $\alpha$-olefin other than propylene. Block polypropylene is a type of polypropylene having a polymer block formed of propylene and a polymer block formed of at least monomer(s) such as an $\alpha$-olefin other than propylene. The polymer block formed of at least monomer(s) such as an $\alpha$-olefin other than propylene may be a polymer block formed of propylene and an $\alpha$-olefin other than propylene.

Examples of $\alpha$-olefins include $\alpha$-olefins containing 2 or more and 20 or fewer carbons other than propylene. Specific examples of $\alpha$-olefins include ethylene, 1-butene, 1-pentene, 1-hexene, 1-octene, 1-decene, 1-dodecene, 1-tetradecene, 1-hexadecene, 1-octadecene, 1-eicosene, 3-methyl-1-butene, 4-methyl-1-pentene, and 6-methyl-1-heptene.

Among types of polypropylene, random polypropylene is particularly preferred when considered from the viewpoint of heat sealability. When priority is given to the rigidity and heat resistance of the packaging container, homopolypropylene is preferred, and when priority is given to the impact resistance of the packaging container, block polypropylene is preferred. In the case of a single-layer sealant film according to the present disclosure, homopolypropylene and block polypropylene are particularly preferred among these types of propylene from the viewpoint of impact resistance, with block polypropylene being more preferred.

The density of the polypropylene is, for example, 0.88 $g/cm^3$ or more and 0.92 $g/cm^3$ or less for heat sealability reasons. The density is measured according to method D (density gradient column method, 23°C) in JIS K7112: 1999. Biomass-derived polypropylene and/or recycled polypropylene may be used for reduced environmental impact.

The single-layer sealant film according to the present disclosure contains one or more types of polyethylene as components dispersed in the matrix resin component. Polyethylene can contribute to increasing the impact resistance of the single-layer sealant film according to the present disclosure. The single-layer sealant film according to the present disclosure is preferably configured to have a sea-island structure in which polyethylene that is a dispersed component (island component) is dispersed in polypropylene that is the matrix resin component (sea component). Through this, the resistance to fall impact of a laminate made using the sealant film for laminates according to the present disclosure can be increased.

Examples of polyethylene include high-density polyethylene (HDPE), medium-density polyethylene (MDPE), low-density polyethylene (LDPE), and linear low-density polyethylene (LLDPE). Of these, low-density polyethylene and linear low-density polyethylene are particularly preferred, with linear low-density polyethylene being more preferred. Linear low-density polyethylene exhibits good dispersibility in the aforementioned polypropylene that is the sea component. With this type of polyethylene, therefore, the impact resistance of the single-layer sealant film can be increased.

The density of low-density polyethylene is preferably 900 $kg/m^3$ or more and 925 $kg/m^3$ or less, more preferably 910 $kg/m^3$ or more and 925 $kg/m^3$ or less. The density is measured according to JIS K7112, method D (density gradient column method, 23°C) in particular. Low-density polyethylene is obtained by, for example, polymerizing ethylene at a high pressure of 1000 atm or more and less than 2000 atm. Low-density polyethylene is also referred to as high-pressure low-density polyethylene.

The density of linear low-density polyethylene is preferably 900 $kg/m^3$ or more and 925 $kg/m^3$ or less, more preferably 915 $kg/m^3$ or more and 925 $kg/m^3$ or less. Linear low-density polyethylene is obtained by, for example, copolymerizing ethylene and an $\alpha$-olefin at a medium pressure or low pressure to introduce short-chain branches derived from the $\alpha$-olefin. Examples of $\alpha$-olefins include $\alpha$-olefins containing four or more and ten or fewer carbons, such as 1-butene, 1-hexene, 4-methyl-1-pentene, and 1-octene.

The polyethylene may be biomass-derived polyethylene or mechanically recycled or chemically recycled polyethylene for reduced environmental impact.

The melting point (Tm) of the polyethylene may be 100°C or above and 120°C or below or may be 105°C or above and 120°C or below. The Tm of the polyethylene is obtained by differential scanning calorimetry (DSC) according to JIS K7121.

The MFR of the polyethylene may be 1 g/10 minutes or more and 20 g/10 minutes or less or may be 2 g/10 minutes or more and 10 g/10 minutes or less. The MFR of the polyethylene is measured under the conditions of a temperature of 190°C and a load of 2.16 kg according to JIS K7210.

The single-layer sealant film according to the present disclosure contains one or more types of ethylene-propylene rubber (EPR) as components dispersed in the matrix resin component. By virtue of the inclusion of ethylene-propylene rubber as dispersed component(s), the resistance to fall impact of a laminate made using the sealant film for laminates according to the present disclosure can be increased.

The ethylene-propylene rubber is not particularly limited as long as it is ethylene-propylene elastomer(s) capable of existing in a dispersed state in polypropylene. Examples of ethylene-propylene rubber include a block elastomer contained in block polypropylene as described later.

The single-layer sealant film according to the present disclosure may contain one or more elastomers as components that improve the state of dispersion of components dispersed in the matrix resin component. Through the inclusion of elastomers as dispersed components, the state of dispersion of the polyethylene and ethylene-propylene rubber that are dispersed components (island components) in the polypropylene that is the matrix resin component (sea component) can be further improved. Through this, the resistance to fall impact of a laminate made using the sealant film for laminates according to the present disclosure can be further increased.

The elastomers are not particularly limited as long as they are thermoplastic elastomers with which the state of dispersion of the polyethylene and the ethylene-propylene rubber within the polypropylene can be improved. Examples of elastomers include a propylene-ethylene copolymer (propylene-ethylene elastomer) and an ethylene-$\alpha$-olefin copolymer (ethylene-$\alpha$-olefin elastomer).

The propylene-ethylene elastomer is a low-crystallinity or amorphous copolymeric elastomer and is a random copolymer composed of propylene units constituting 50% by mass or more and 90% by mass or less as a main component and ethylene units as a comonomer. The propylene-ethylene elastomer is preferably an elastomer produced using a metallocene catalyst.

The ethylene-$\alpha$-olefin elastomer is a low-crystallinity or amorphous copolymeric elastomer and is a random copolymer composed of ethylene units constituting 50% by mass or more and 90% by mass or less as a main component and $\alpha$-olefin units as a comonomer. The ethylene-$\alpha$-olefin elastomer is preferably an elastomer produced using a metallocene catalyst.

Examples of $\alpha$-olefins include $\alpha$-olefins containing three or more and ten or fewer carbons. Specific examples include propylene, 1-butene, 1-hexene, and 1-octene. Examples of ethylene-$\alpha$-olefin elastomers include an ethylene-propylene random copolymer, an ethylene-1-butene random copolymer, and an ethylene-1-octene random copolymer.

The MFRs of the elastomers are preferably 0.1 g/10 minutes or more and 10 g/10 minutes or less, more preferably 0.2 g/10 minutes or more and 5 g/10 minutes or less. The MFRs of the elastomers are measured under the conditions of a temperature of 230°C or 190°C and a load of 2.16 kg according to JIS K7210.

The single-layer sealant film according to the present disclosure may contain additives. Examples of additives include crosslinking agents, antioxidants, anti-blocking agents, slipping agents, ultraviolet absorbers, photostabilizers, fillers, reinforcing agents, antistatic agents, pigments, and reforming resins.

The thickness of the single-layer sealant film according to the present disclosure is preferably 10 $\mu$m or more, more preferably 20 $\mu$m or more, and preferably is 200 $\mu$m or less, more preferably 150 $\mu$m or less. For example, the thickness is 10 $\mu$m or more and 200 $\mu$m or less. A laminate that includes, as its sealant layer, a single-layer sealant film having a thickness equal to or greater than the lower limits is superior in, for example, seal strength. A laminate that includes, as its sealant layer, a single-layer sealant film having a thickness equal to or smaller than the upper limits is superior in, for example, workability. When a pouch (a retort pouch in particular) is produced from the laminate, the thickness of the sealant layer is preferably 30 $\mu$m or more, and preferably is 100 $\mu$m or less.

Herein, the thickness of a base material or each layer is measured as follows. A block in which the laminate is embedded in embedding resin is prepared. By cutting this block in a room-temperature (25°C) environment using a commercially available rotary microtome, a cross-section of the laminate is created. The cross-section is obtained by cutting in the thickness direction, which is perpendicular to the primary surface of the laminate. The finishing is conducted using a diamond knife. The thickness of a base material or each layer is defined as the arithmetic mean of thicknesses at five points measured by observing this cross-section using a scanning electron microscope (SEM; SU8000, manufactured by Hitachi, Ltd.)

<Multilayer Structure>

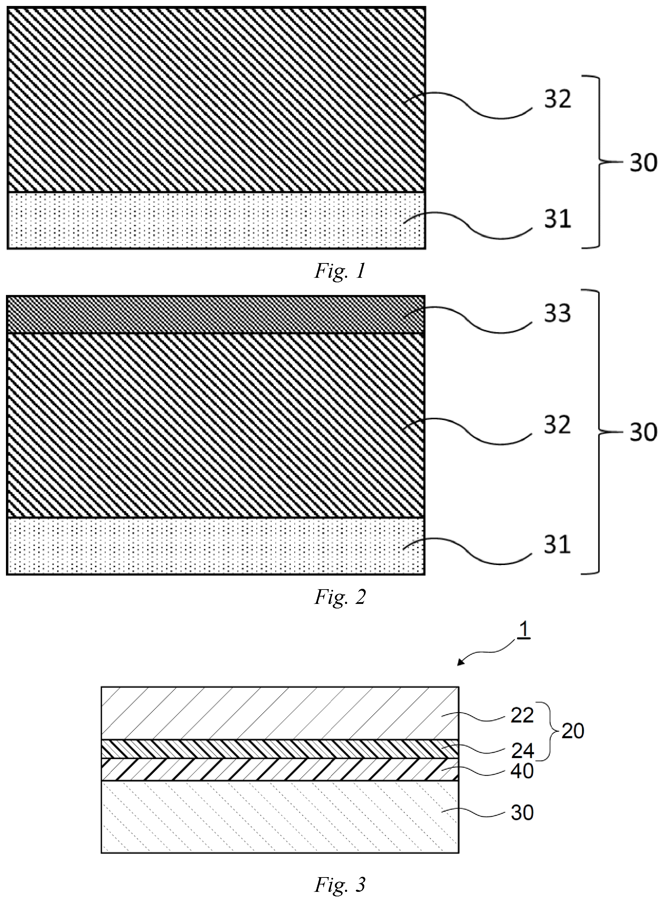

Fig. 1 and Fig. 2 are schematic cross-sectional views each illustrating an embodiment of a sealant film for laminates in a multilayer structure (hereinafter also referred to simply as "multilayer sealant film").

The sealant film 30 for laminates illustrated in Fig. 1 is in a two-layer configuration and includes a first layer 31 as a seal layer and a second layer 32 as a core layer in this order in the thickness direction. In this example, when the sealant film 30 for laminates is used in a laminate, the first layer 31 is positioned outermost in the laminate, and the second layer 32 is positioned further inside in the laminate.

The sealant film 30 for laminates illustrated in Fig. 2 is in a three-layer configuration and includes a first layer 31 as a seal layer, a second layer 32 as a core layer, and a third layer 33 as a surface layer in this order in the thickness direction. In this example, when the sealant film 30 for laminates is used in a laminate, the first layer 31 is positioned outermost in the laminate and constitutes one of the two surfaces of the laminate, and the third layer 33 is positioned further inside in the laminate.

(First Layer)

The first layer preferably contains at least one first matrix resin component and at least one first dispersed component. In an embodiment, the first layer preferably has what is called a sea-island structure, in which an island component is dispersed in a sea component, with the first matrix resin component being the sea component, and the first dispersed component being the island component.

The first layer constitutes a seal layer of the multilayer sealant film according to the present disclosure.

The first matrix resin component includes at least one type of polypropylene. The polypropylene may be any of homopolypropylene, random polypropylene, or block polypropylene or may be a mixture of two or more selected from these. Of these, it is particularly preferred that the polypropylene be a propylene-ethylene random copolymer.

The propylene-ethylene random copolymer (random polypropylene) is a random copolymer composed of propylene units constituting 51% by mass or more and 90% by mass or less as a main component and ethylene units as a comonomer. In comparison with propylene homopolymers (homopolypropylene), the copolymer is superior in transparency and impact strength and has a melting point lower by 20°C to 30°C.

The ethylene content of the random polypropylene is preferably 1.0% by mass or more, more preferably 2.0% by mass or more. The ethylene content of the random polypropylene is preferably 20% by mass or less, more preferably 10% by mass or less. When the ethylene content is equal to or higher than the lower limits, low-temperature sealability can be guaranteed when a laminate is formed using the multilayer sealant film according to the present disclosure. When the ethylene content is equal to or lower than the upper limits, an excessive decrease in heat resistance can be reduced when a laminate is formed using the multilayer sealant film according to the present disclosure.

The ethylene content of the random polypropylene can be measured by the method for determining ethylene content (the IR method) described on pages 412 and 413 of the handbook for polymer analysis (May 10, 2013; third printing) edited by the Research Committee for Polymer Analysis of the Japan Society for Analytical Chemistry.

The melting point of the random polypropylene is preferably 145°C or below, more preferably 135°C or below. When the melting point is equal to or lower than the upper limits, the low-temperature sealability of a laminate made using the multilayer sealant film according to the present disclosure is good. The suitability for shaping into a bag of the laminate, therefore, can be improved. The lower limit to the melting point of the random polypropylene is preferably 120 or above. When the melting point is equal to or higher than the lower limit, heat-seal strength can be guaranteed under temperature conditions for "semi-retort" treatment (retort treatment at lower temperatures) when a laminate made using the multilayer sealant film according to the present disclosure is used in, for example, a retort pouch.

Herein, the melting point can be measured according to JIS K7121: 2012 (Testing Methods for Transition Temperatures of Plastics). Specifically, a DSC curve is measured at a temperature elevation rate of 10°C/minute by differential scanning calorimetry (DSC), from which the melting point can be determined.

The melt flow rate (MFR) of the random polypropylene is preferably 0.5 g/10 minutes or more and 10 g/10 minutes or less, more preferably 1 g/10 minutes or more and 5 g/10 minutes or less. The MFR of the propylene-ethylene random copolymer is measured under the conditions of a temperature of 230°C and a load of 2.16 kg according to JIS K7210.

Examples of methods for producing the random polypropylene include the method of polymerizing monomers such as the raw-material propylene and ethylene using a catalyst. Examples of catalysts include Ziegler-Natta catalysts and metallocene catalysts.

The first dispersed component preferably includes polyethylene. Polyethylene can contribute to increasing the impact resistance of the multilayer sealant film according to the present disclosure. The first layer preferably has a sea-island structure in which polyethylene that is a first dispersed component (island component) is dispersed in random polypropylene that is a first matrix resin component (sea component). By configuring the first layer in such a manner, the resistance to fall impact of a laminate made using the multilayer sealant film according to the present disclosure can be increased.

Examples of polyethylene include, as mentioned above, high-density polyethylene (HDPE), medium-density polyethylene (MDPE), low-density polyethylene (LDPE), and linear low-density polyethylene (LLDPE). Of these, low-density polyethylene and linear low-density polyethylene are particularly preferred, with linear low-density polyethylene being more preferred. Linear low-density polyethylene exhibits good dispersibility in the aforementioned random polypropylene that is the sea component. With this type of polyethylene, therefore, the impact resistance of the first layer can be increased. By virtue of this, delamination caused by discontinuity of impact resistance can be reduced at the interface between the first layer and the second layer of the sealant film for laminates.

The first dispersed component may further include a first elastomer. By including a first elastomer in the first dispersed component, the state of dispersion of the polyethylene that is a first dispersed component (island component) within the random polypropylene that is a first matrix resin component (sea component) can be further improved. Through this, the resistance to fall impact of a laminate made using the multilayer sealant film according to the present disclosure can be further increased.

The first elastomer is not particularly limited as long as it is a thermoplastic elastomer with which the state of dispersion of the polyethylene within the random polypropylene can be improved. Examples of first elastomers include, as mentioned above, a propylene-ethylene copolymer (propylene-ethylene elastomer) and an ethylene-$\alpha$-olefin copolymer (ethylene-$\alpha$-olefin elastomer).

The MFR of the first elastomer is preferably 0.1 g/10 minutes or more and 10 g/10 minutes or less, more preferably 0.2 g/10 minutes or more and 5 g/10 minutes or less. The MFR of the first elastomer is measured under the conditions of a temperature of 230°C or 190°C and a load of 2.16 kg according to JIS K7210.

In the first layer, the percentage of the first matrix resin component is 30% by mass or more, preferably 35% by mass or more, more preferably 40% by mass or more, relative to the total amount of the first layer. In the first layer, the percentage of the first matrix resin component is 90% by mass or less relative to the total amount of the first layer. For example, the percentage of the first matrix resin component is 30% by mass or more and 90% by mass or less.

In the first layer, the percentage of the first dispersed component is preferably 10% by mass or more, more preferably 15% by mass or more, relative to the total amount of the first layer. In the first layer, the percentage of the first dispersed component is preferably 49% by mass or less, more preferably 30% by mass or less, relative to the total amount of the first layer. For example, in the first layer, the percentage of the first dispersed component is 10% by mass or more and 49% by mass or less relative to the total amount of the first layer. When the percentage of the first dispersed component is equal to or higher than the lower limits in the first layer, the impact resistance of a laminate made using the multilayer sealant film according to the present disclosure, for example, can be further improved. When the percentage of the first dispersed component is equal to or lower than the upper limits, the seal strength of a laminate made using the multilayer sealant film according to the present disclosure, for example, can be further improved.

In the first layer, the percentage of polyethylene is 1% by mass or more, preferably 2% by mass or more, relative to the total amount of the first layer. In the first layer, the percentage of polyethylene is, for example, 50% by mass or less relative to the total amount of the first layer. For example, in the first layer, the percentage of polyethylene is 1% by mass or more and 50% by mass or less relative to the total amount of the first layer. When the percentage of polyethylene is equal to or higher than the lower limits, the impact resistance of a laminate made using the multilayer sealant film according to the present disclosure, for example, can be further improved. When the percentage of polyethylene is equal to or lower than the upper limit, the seal strength of a laminate made using the multilayer sealant film according to the present disclosure, for example, can be further improved.

In the first layer, the percentage of the first elastomer is preferably 4% by mass or more, more preferably 7% by mass or more, relative to the total amount of the first layer. In the first layer, the percentage of the first elastomer is, for example, 15% by mass or less relative to the total amount of the first layer. For example, in the first layer, the percentage of the first elastomer is 4% by mass or more and 15% by mass or less relative to the total amount of the first layer. When the percentage of the first elastomer is equal to or higher than the lower limits, the impact resistance of a laminate made using the multilayer sealant film according to the present disclosure, for example, can be further improved. When the percentage of the first elastomer is equal to or lower than the upper limit, the seal strength of a laminate made using the multilayer sealant film according to the present disclosure, for example, can be further improved.

In the first dispersed component, the ratio of the amount of the first elastomer to the amount of polyethylene is preferably 0.5 or greater and less than 1.0. When the ratio of the amount of the first elastomer to the amount of polyethylene falls within this range in the first dispersed component, the impact resistance of a laminate made using the multilayer sealant film according to the present disclosure, for example, can be further improved.

The thickness of the first layer is preferably 5 μm or more, more preferably 10 μm or more, further preferably 12 μm or more. The thickness of the first layer is preferably 20 μm or less, more preferably 15 μm or less. When the thickness is equal to or greater than the lower limits, the low-temperature sealability and impact resistance of a packaging container including a laminate made using the multilayer sealant film according to the present disclosure, for example, can be further improved. When the thickness is equal to or smaller than the upper limits, the workability of a laminate made using the multilayer sealant film according to the present disclosure, for example, can be further improved.

(Second Layer)

The second layer preferably contains at least one second matrix resin component and at least one second dispersed component. In an embodiment, the second layer preferably has what is called a sea-island structure, in which an island component is dispersed in a sea component, with the second matrix resin component being the sea component, and the second dispersed component being the island component.

The second layer constitutes a core layer of the multilayer sealant film according to the present disclosure.

The second matrix resin component includes at least one type of polypropylene. The polypropylene may be any of homopolypropylene, random polypropylene, or block polypropylene or may be a mixture of two or more selected from these. Of these, it is particularly preferred that the polypropylene be block polypropylene (block PP).

Block polypropylene (a propylene block copolymer) is a copolymer containing at least a propylene homopolymer (homopolypropylene) and a block elastomer. Examples of block polypropylene include a propylene-ethylene block copolymer.

The propylene-ethylene block copolymer includes, in an embodiment, a polymer portion formed of a propylene polymer (a) and a polymer portion formed of polyethylene and an ethylene-propylene copolymeric rubber component (ethylene-propylene rubber) (b). The propylene-ethylene block copolymer includes, in an embodiment, a sea component formed of a propylene polymer and an island component formed of polyethylene and an ethylene-propylene copolymeric rubber component. Polymer portion (a) and the sea component can contribute to increasing the heat resistance, rigidity, anti-blocking properties, and seal strength of the propylene-ethylene block copolymer. Polymer portion (b) and the island component can contribute to increasing the impact resistance of the propylene-ethylene block copolymer. By adjusting the proportions of polymer portion (a) and polymer portion (b) or the proportions of the sea component and the island component, therefore, the mechanical properties of the second layer containing the propylene-ethylene block copolymer can be adjusted.

The propylene polymer in polymer portion (a) is, in an embodiment, a propylene homopolymer having a melting point of 160°C or above. This propylene polymer may be a copolymer of propylene and a small amount (e.g., 5 mol% or less) of α-olefin as long as its melting point is 160°C or above. Examples of α-olefins include ethylene, 1-butene, 1-hexene, and 1-octene.

In polymer portion (b), the percentage of constituent units derived from ethylene is preferably 10% by mass or more, more preferably 20% by mass or more, for example in the polyethylene and the ethylene-propylene copolymeric rubber component. This percentage, furthermore, is preferably 50% by mass or less, more preferably 40% by mass or less. By ensuring that the percentage falls within these preferred ranges, resistance to fall impact, for example, can be further improved. In the present disclosure, the percentage of constituent units in block polypropylene can be measured by, for example, thermal gradient interaction chromatography (TGIC). It should be noted that in polymer portion (b), the ethylene-propylene copolymeric rubber component corresponds to the block elastomer.

In the propylene-ethylene block copolymer, the proportion by mass of polymer portion (a) or the sea component, formed of a propylene polymer, is preferably higher than the proportion by mass of polymer portion (b) or the island component, formed of polyethylene and an ethylene-propylene copolymeric rubber component.

In the propylene-ethylene block copolymer, the proportion by mass of polymer portion (a) or the sea component, formed of a propylene polymer, is preferably 51% by mass or more, more preferably 60% by mass or more, further preferably 70% by mass or more. The upper limit to the proportion by mass of polymer portion (a) or the sea component, formed of a propylene polymer, is, for example, 90% by mass.

In the propylene-ethylene block copolymer, the proportion by mass of polymer portion (b) or the island component, formed of polyethylene and an ethylene-propylene copolymeric rubber component, is preferably 49% by mass or less, more preferably 40% by mass or less, further preferably 30% by mass or less. The lower limit to the proportion by mass of polymer portion (b) or the island component, formed of polyethylene and an ethylene-propylene copolymeric rubber component, is, for example, 10% by mass.

The melt flow rate (MFR) of the propylene-ethylene block copolymer is preferably 0.5 g/10 minutes or more and 10 g/10 minutes or less, more preferably 1 g/10 minutes or more and 5 g/10 minutes or less. The MFR of the propylene-ethylene block copolymer is measured under the conditions of a temperature of 230°C and a load of 2.16 kg according to JIS K7210.

Examples of methods for producing the propylene-ethylene block copolymer include the method of polymerizing monomers such as the raw-material propylene and ethylene using a catalyst. Examples of catalysts include Ziegler-Natta catalysts and metallocene catalysts.

The second dispersed component preferably includes polyethylene. Polyethylene can contribute to increasing the impact resistance of the sealant film for laminates according to the present disclosure. The second layer preferably has a sea-island structure in which polyethylene is dispersed as a second dispersed component in block polypropylene (a propylene-ethylene block copolymer) that is a second matrix resin component. That is, by ensuring that the second layer has a sea-island structure in which a polymer portion formed of an ethylene-propylene copolymeric rubber component (b) and polyethylene that is a second dispersed component are dispersed in a polymer portion formed of a propylene polymer (a), the resistance to fall impact of a laminate made using the multilayer sealant film according to the present disclosure can be further increased.

Types of polyethylene that can be used are the same as the types of polyethylene for the first dispersed component in the first layer.

The second dispersed component may further include a second elastomer. By including a second elastomer in the second dispersed component, the state of dispersion of the polyethylene that is a second dispersed component (island component) within the propylene-ethylene block copolymer that is a second matrix resin component (sea component) can be further improved. Through this, the resistance to fall impact of a laminate made using the multilayer sealant film according to the present disclosure can be further increased.

Elastomers that can be used as second elastomers are the same thermoplastic elastomers as for the first dispersed component in the first layer.

In the second layer, the percentage of the second matrix resin component is 30% by mass or more, preferably 35% by mass or more, relative to the total amount of the second layer. In the second layer, the percentage of the second matrix resin component is 90% by mass or less relative to the total amount of the second layer. For example, in the second layer, the percentage of the second matrix resin component is 30% by mass or more and 90% by mass or less relative to the total amount of the second layer.

In the second layer, the percentage of the second dispersed component is preferably 10% by mass or more, more preferably 15% by mass or more, relative to the total amount of the second layer. In the second layer, the percentage of the second dispersed component is preferably 49% by mass or less, more preferably 30% by mass or less, relative to the total amount of the second layer. For example, in the second layer, the percentage of the second dispersed component is 10% by mass or more and 49% by mass or less relative to the total amount of the second layer. When the percentage of the second dispersed component is equal to or higher than the lower limits in the second layer, the impact resistance of a laminate made using the multilayer sealant film according to the present disclosure, for example, can be further improved. When the percentage of the second dispersed component is equal to or lower than the upper limits, the heat resistance of a laminate made using the multilayer sealant film according to the present disclosure, for example, can be further improved.

In the second layer, the percentage of polyethylene is 5, preferably 1% by mass or more, more preferably 2% by mass or more, relative to the total amount of the second layer. In the second layer, the percentage of polyethylene is, for example, 50% by mass or less relative to the total amount of the second layer. For example, in the second layer, the percentage of polyethylene is 1% by mass or more and 50% by mass or less relative to the total amount of the second layer. When the percentage of polyethylene is equal to or higher than the lower limits, the impact resistance of a laminate made using the multilayer sealant film according to the present disclosure, for example, can be further improved. When the percentage of polyethylene is equal to or lower than the upper limit, the heat resistance of a laminate made using the multilayer sealant film according to the present disclosure, for example, can be further improved.

In the second layer, the percentage of the second elastomer is preferably 4% by mass or more, more preferably 7% by mass or more, relative to the total amount of the second layer. In the second layer, the percentage of the second elastomer is, for example, 15% by mass or less relative to the total amount of the second layer. For example, in the second layer, the percentage of the second elastomer is 4% by mass or more and 15% by mass or less relative to the total amount of the second layer. When the percentage of the second elastomer is equal to or higher than the lower limits, the impact resistance of a laminate made using the multilayer sealant film according to the present disclosure, for example, can be further improved. When the percentage of the second elastomer is equal to or lower than the upper limit, the heat resistance of a laminate made using the multilayer sealant film according to the present disclosure, for example, can be further improved.

In the second dispersed component, the ratio of the amount of the second elastomer to the amount of polyethylene is preferably 0.5 or greater and less than 1.0. When the ratio of the amount of the second elastomer to the amount of polyethylene falls within this range in the second dispersed component, the impact resistance of a laminate made using the multilayer sealant film according to the present disclosure, for example, can be further improved.

The thickness of the second layer is preferably 30 μm or more, more preferably 40 μm or more, further preferably 50 μm or more. The thickness of the second layer is preferably 100 μm or less, more preferably 80 μm or less, further preferably 60 μm or less. When the thickness is equal to or greater than the lower limits, the heat resistance and impact resistance of a packaging container including a laminate made using the multilayer sealant film according to the present disclosure, for example, can be further improved. When the thickness is equal to or smaller than the upper limits, the workability of a laminate made using the multilayer sealant film according to the present disclosure, for example, can be further improved.

(Third Layer)

The third layer preferably contains at least one third matrix resin component and at least one third dispersed component. In an embodiment, the third layer preferably has what is called a sea-island structure, in which an island component is dispersed in a sea component, with the third matrix resin component being the sea component, and the third dispersed component being the island component.

The third layer constitutes a surface layer of the multilayer sealant film according to the present disclosure.

The third matrix resin component includes at least one type of polypropylene. The polypropylene may be any of homopolypropylene, random polypropylene, or block polypropylene or may be a mixture of two or more selected from these. Of these, it is particularly preferred that the polypropylene be block polypropylene (block PP).

Types of block polypropylene that can be used are the same as for the second matrix resin component in the second layer.

The third dispersed component preferably includes polyethylene. Polyethylene can contribute to increasing the impact resistance of the multilayer sealant film according to the present disclosure. By ensuring that the third layer has a sea-island structure in which polyethylene that is a third dispersed component (island component) is dispersed in block polypropylene that is a third matrix resin component (sea component), the resistance to fall impact of a laminate made using the multilayer sealant film according to the present disclosure can be increased.

Types of polyethylene that can be used are the same as in the first layer and the second layer.

The third dispersed component may further include a third elastomer. By including a third elastomer in the third dispersed component, the state of dispersion of the polyethylene that is a third dispersed component (island component) within the propylene-ethylene block copolymer that is a third matrix resin component (sea component) can be further improved. Through this, the resistance to fall impact of a laminate made using the multilayer sealant film according to the present disclosure can be further increased.

Elastomers that can be used as third elastomers are the same thermoplastic elastomers as in the first layer and the second layer.

In the third layer, possible percentages of the third matrix resin component and possible percentages of the third dispersed component are the same as in the second layer.

In the third layer, possible percentages of polyethylene and possible percentages of the third elastomer are the same as in the second layer.

The thickness of the third layer is preferably 5 μm or more, more preferably 10 μm or more, further preferably 12 μm or more. The thickness of the third layer is preferably 20 μm or less, more preferably 15 μm or less. When the thickness is equal to or greater than the lower limits, the heat resistance and impact resistance of a packaging container including a laminate made using the multilayer sealant film according to the present disclosure, for example, can be further improved. When the thickness is equal to or smaller than the upper limits, the workability of a laminate made using the multilayer sealant film according to the present disclosure, for example, can be further improved.

In the multilayer sealant film according to the present disclosure, the polyethylene used in the first layer, that in the second layer, and that in the third layer may all be the same type of polyethylene or may be types of polyethylene varying in density and molecular weight from each other. Likewise, in the sealant film, the first to third elastomers used in the first layer, the second layer, and the third layer may all be the same type of thermoplastic elastomer or may be types of thermoplastic elastomers different from each other.

The multilayer sealant film according to the present disclosure preferably has a smaller percentage of the first dispersed component relative to the total amount of the first layer, which is a seal layer, than the percentage of the second dispersed component relative to the total amount of the second layer, which is a core layer. With a multilayer sealant film that satisfies this relationship, the occurrence of a fracture at the interface between the first layer and the second layer can be reduced by increasing compatibility between the two layers by maintaining continuity of impact resistance between the two layers, and low-temperature sealability attributed to the first layer can be further improved at the same time.

The multilayer sealant film according to the present disclosure preferably has a ratio of the thickness of the second layer to the thickness of the first layer of 3.0 or greater. With a sealant film for laminates that satisfies this relationship, with a multilayer sealant film that satisfies this relationship, heat resistance and impact resistance attributed to the second layer can be further improved.

The thickness of the multilayer sealant film according to the present disclosure is preferably 30 $\mu$m or more, more preferably 40 $\mu$m or more, further preferably 50 $\mu$m or more. The thickness of the multilayer sealant film, furthermore, is preferably 200 $\mu$m or less, more preferably 100 $\mu$m or less, further preferably 80 $\mu$m or less. When the thickness is equal to or greater than the lower limits, the time required to heat-seal a packaging container including a laminate made using the multilayer sealant film according to the present disclosure, for example, can be shortened. When the thickness is equal to or smaller than the upper limits, the working suitability of the laminate, for example, can be further improved. When a pouch (a retort pouch in particular) is produced from the laminate, the thickness of the sealant layer is preferably 30 $\mu$m or more and 200 $\mu$m or less, more preferably 40 $\mu$m or more and 100 $\mu$m or less, further preferably 50 $\mu$m or more and 80 $\mu$m or less.

<Percentages of Components>

The percentage of polypropylene in the sealant film for laminates according to the present disclosure (a single-layer sealant film or a multilayer sealant film) is 40% by mass or more relative to the total amount of the sealant film. The percentage of polypropylene in the sealant film for laminates according to the present disclosure, furthermore, is preferably 80% by mass or less, more preferably 70% by mass or less, further preferably 60% by mass or less, particularly preferably 56% by mass or less, relative to the total amount of the sealant film. For example, the percentage of polypropylene in the sealant film for laminates according to the present disclosure is 40% by mass or more and 80 or less relative to the total amount of the sealant film.

By virtue of the polypropylene content being 40% by mass or more relative to the total amount of the sealant film, the advantage of enhancing resistance to heat sterilization is provided. When the percentage is 80% by mass or less, furthermore, the percentages of polyethylene and ethylene-propylene rubber can be set high. The resistance to fall impact (impact resistance) of a packaging container made using a laminate including the sealant film as its sealant layer, therefore, can be improved.

In the sealant film for laminates according to the present disclosure, the percentage of polyethylene relative to the total amount of the sealant film is preferably 25% by mass or more, more preferably 29% by mass or more, further preferably 30% by mass or more. The percentage of polyethylene relative to the total amount of the sealant film, furthermore, is preferably 50% by mass or less, more preferably 45% by mass or less, further preferably 40% by mass or less. For example, the percentage of polyethylene relative to the total amount of the sealant film is 25% by mass or more and 50% by mass or less. When the percentage of polyethylene is equal to or higher than the lower limits, the impact resistance of a laminate made using the sealant film according to the present disclosure, for example, can be further improved. When the percentage of polyethylene is equal to or lower than the upper limits, the seal strength of a laminate made using the sealant film according to the present disclosure, for example, can be further improved.

In the sealant film for laminates according to the present disclosure, the percentage of ethylene-propylene rubber (EPR) relative to the total amount of the sealant film is preferably 5.0% by mass or more, more preferably 7.0% by mass or more, further preferably 9.0% by mass or more, still more preferably 9.8% by mass or more. The percentage of ethylene-propylene rubber (EPR) relative to the total amount of the sealant film, furthermore, is preferably 20.0% by mass or less, more preferably 17.5% by mass or less, still more preferably 15.0% by mass or less. For example, the percentage of ethylene-propylene rubber (EPR) relative to the total amount of the sealant film is 5.0% by mass or more and 20.0% by mass or less. When the percentage of ethylene-propylene rubber is equal to or higher than the lower limits, the impact resistance of a laminate made using the sealant film according to the present disclosure, for example, can be further improved. When the percentage of ethylene-propylene rubber is equal to or lower than the upper limits, the seal strength of a laminate made using the sealant film according to the present disclosure, for example, can be further improved.

In the sealant film for laminates according to the present disclosure, the percentage of the dispersed components combined (i.e., the total percentage of polyethylene and ethylene-propylene rubber) relative to the total amount of the sealant film is preferably 30% by mass or more, more preferably 40% by mass or more, further preferably 44% by mass or more. The percentage of the dispersed components combined relative to the total amount of the sealant film, furthermore, is preferably 60% by mass or less, more preferably 57% by mass or less, further preferably 55% by mass or less, still more preferably 50% by mass or less. For example, the percentage of the dispersed components combined relative to the total amount of the sealant film is 30% by mass or more and 60% by mass or less. When the percentage of the dispersed components combined exceeds the lower limits in the sealant film according to the present disclosure, the impact resistance of a laminate made using the sealant film according to the present disclosure, for example, can be further improved. When the percentage of the dispersed components combined is lower than the upper limits, furthermore, the seal strength of a laminate made using the sealant film according to the present disclosure, for example, can be further improved.

In a single-layer sealant film according to the present disclosure, the percentage of elastomers relative to the total amount of the sealant film is preferably 3% by mass or more, more preferably 5% by mass or more, further preferably 10% by mass or more. The percentage of elastomers relative to the total amount of the sealant film, furthermore, is preferably 30% by mass or less, more preferably 25% by mass or less, further preferably 20% by mass or less. For example, the percentage of elastomers relative to the total amount of the sealant film is 3% by mass or more and 30% by mass or less. When the percentage of elastomers relative to the total amount of the sealant film is equal to or higher than the lower limits, the impact resistance of a laminate made using the single-layer sealant film according to the present disclosure, for example, can be further improved. When the percentage of elastomers is equal to or lower than the upper limits, the seal strength of a laminate made using the single-layer sealant film according to the present disclosure, for example, can be further improved.

In a multilayer sealant film according to the present disclosure, the percentage of the first to third elastomers (thermoplastic elastomers) combined relative to the total amount of the sealant film is preferably 3% by mass or more, more preferably 5% by mass or more. The percentage of the thermoplastic elastomers combined relative to the total amount of the sealant film is preferably 30% by mass or less, more preferably 25% by mass or less, further preferably 20% by mass or less. For example, the percentage of the thermoplastic elastomers combined relative to the total amount of the sealant film is 3% by mass or more and 30% by mass or less. When the percentage of the thermoplastic elastomers combined relative to the total amount of the sealant film falls within these ranges, the impact resistance of a laminate made using the multilayer sealant film according to the present disclosure, for example, can be further improved. When the percentage of the elastomers is equal to or lower than the upper limits, the seal strength of a laminate made using the multilayer sealant film according to the present disclosure, for example, can be further improved.

The percentages of the individual components constituting the sealant film for laminates according to the present disclosure are values calculated from the results of a composition analysis of the sealant film.

Examples of composition analyses of the sealant film include structural identification of crystalline and amorphous polymers using a nuclear magnetic resonance (NMR) spectrometer, and composition distribution analysis by thermal gradient interaction chromatography (TGIC) and crystallization elution fractionation (CEF) using a composition distribution analyzer. By combining one or more of such analyses, the percentages of the individual components are obtained.

As a specific example of a composition analysis of the sealant film, when the types and blending percentages of raw materials are unknown, the structure of crystalline polymers and amorphous polymers contained in the sealant film is first determined by $^{13}$C-NMR. Then a TGIC analysis and a CEF analysis using a composition analyzer are performed, whereby the amounts of the identified crystalline polymers and amorphous polymers are calculated individually. It should be noted that when the blending percentages of the materials that are the raw materials for the production of the sealant film are known, the structural identification by NMR may be omitted.

The method for sample preparation and the measurement conditions for the TGIC analysis and the CEF analysis will be described in detail in the Examples section. The NMR analysis, furthermore, can be performed under, for example, the following measurement conditions.

(NMR Measurement Conditions)

- Instrument: AVANCE III cryo-500 nuclear magnetic resonance spectrometer, manufactured by Bruker BioSpin

- Nucleus measured: $^{13}$C (125 MHz)

- Measurement mode: Single-pulse proton broadband decoupling

- Pulse width: 45° (5.00 µsec)

- Number of points: 64k

- Observation range: 250 ppm (-55 to 195 ppm)

- Repetition time: 5.5 seconds

- Number of scans: 128

- Solvent for measurement: Ortho-dichlorobenzene/benzene-$d_6$ (4/1 v/v)

- Sample concentration: ca. 60 mg/0.6 mL

- Measurement temperature: 120°C

- Window function: Exponential (BF: 1.0 Hz)

- Chemical shift reference: $\delta\delta$ signal, 29.73 ppm

<Composite Modulus of Elasticity>

The composite modulus of elasticity of the sealant film for laminates according to the present disclosure is 500 MPa or more, preferably 600 MPa or more, more preferably 650 MPa or more, and 900 MPa or less, preferably 800 MPa or less, more preferably 850 MPa or less, and is 500 MPa or more and 900 MPa or less. A packaging container produced using a laminate that includes, as its sealant layer, a sealant film having a composite modulus of elasticity falling within these ranges tends to be superior in resistance to breakage from a fall (impact resistance) and hand tearability (openability).

The composite modulus of elasticity of the sealant film for laminates is measured by nanoindentation. Specifically, a cross-section of the sealant layer of a laminate made using the sealant film as the sealant layer is defined as the surface for measurement, and the composite modulus of elasticity is measured using a nanoindenter.

The cross-section is obtained by folding the laminate into a V-shape such that its sealant film side is positioned inside, heat-sealing the folded laminate to a width of 130 mm and a height of 165 mm, thereby producing a bag-shaped pouch, filling the resulting pouch with 100 mL of water through its opening, hermetically sealing the opening by heat sealing, subjecting the sealed pouch to hot-water retort sterilization treatment at a retort temperature of 121°C for a retort duration of 30 minutes, and cutting the sterilized pouch in the direction along the thickness of the laminate.

The location where the indenter is pressed is in the portion in which the cross-section of the sealant layer is exposed, and near the middle of each layer constituting the sealant layer in the direction along the thickness of the sealant layer.

Specifically, when the sealant layer has a single-layer structure, the indentation location is near the middle of the sealant layer in the thickness direction. When the sealant layer has a multilayer structure, for example, when the sealant layer (sealant film) has a three-layer structure, three indentation locations are used: 2 µm inward from the interface with an adhesive agent layer, near the middle, and 2 µm inward from the seal surface. In this case, the location positioned 2 µm inward from the seal surface corresponds to the first layer (seal layer), the location positioned near the middle corresponds to the second layer (core layer), and the location positioned 2 µm inward from the interface with an adhesive agent layer corresponds to the third layer (surface layer).

When the sealant layer is in a structure including four or more layers, furthermore, the indentation locations are near the middle of the individual layers in the direction along the thickness of the sealant layer are used.

The measurement conditions are as follows. The tip of the nanoindenter is a Berkovich tip (three-sided pyramidal tip). Over 3 seconds, the indenter is pressed into the sealant layer from the cross-section of the sealant layer to a load of 30 µN. The indenter is held in that state for 5 seconds and then released over 3 seconds, and the maximum load $P_{max}$, the projected contact area at the maximum depth $A_p$, and the load-displacement curve are obtained. From the load-displacement curve obtained, the composite modulus of elasticity is calculated according to equation (1) below.

[Math. 1]

$$E_r = \frac{S\sqrt{\pi}}{2\sqrt{A_p}} \quad \cdots \quad (1)$$

In equation (1), $A_p$ is the projected contact area, S is contact stiffness, and $E_r$ is the composite modulus of elasticity of the sealant layer.

The measurement is conducted in a room-temperature (23°C) environment. The measurement is conducted at five or more points at each measurement location (location where the indenter is pressed) on the same cross-section. The composite modulus of elasticity is reported for each individual layer constituting the sealant layer as the arithmetic mean of values from five points measured at the corresponding measurement location. The details of the measurement conditions will be described in the Examples section.

It should be noted that when the measurements at the three locations in the direction along the thickness of the sealant layer (sealant film) are equal, the value is regarded as the composite modulus of elasticity of the sealant film for laminates.

When the sealant film has a multilayer structure and when the measurements in the thickness direction are different, the value in the portion having the greatest thickness in the cross-section of the sealant layer is regarded as the composite modulus of elasticity of the sealant film for laminates.

The composite modulus of elasticity of the sealant film for laminates can be adjusted by the amounts of additives, such as polyethylene and elastomers. Specifically, the composite modulus of elasticity can be reduced by increasing the amounts of additives, and the composite modulus of elasticity can be increased by reducing the amounts of additives.

The composite modulus of elasticity of the sealant film for laminates, furthermore, can be adjusted by the amount of ethylene-propylene rubber (EPR) when the sealant film for laminates contains block polypropylene. Specifically, the composite modulus of elasticity can be reduced by increasing the amount of ethylene-propylene rubber (EPR), and the composite modulus of elasticity can be increased by reducing the amount of EPR.

<Percentage Thermal Shrinkage>

The sealant film for laminates according to the present disclosure preferably exhibits a percentage thermal shrinkage of 0% or more in the flow direction (MD direction) after being heated for 15 minutes at 120°C. The percentage thermal shrinkage, furthermore, is preferably 0.5% or less, more preferably 0.4% or less, further preferably 0.3% or less. For example, the percentage thermal shrinkage is 0% or more and 0.5% or less. A packaging container produced using a laminate that includes, as its sealant layer, a sealant film that exhibits a percentage thermal shrinkage falling within these ranges experiences little shrinkage and is unlikely to crease when heated, for example in retort sterilization. Such a packaging container, furthermore, tends to be better in terms of hand tearability after retort treatment, and thus openability.

The percentage thermal shrinkage of the sealant film for laminates can be adjusted by the selection of the type(s) of polypropylene and the amounts of the individual components.

Regarding the type(s) of polypropylene, block polypropylene has higher heat resistance compared with random polypropylene. By increasing the percentage of block polypropylene, therefore, the percentage thermal shrinkage can be increased, and by increasing the percentage of random polypropylene, the percentage thermal shrinkage can be reduced.

When the sealant film for laminates contains block polypropylene, heat resistance becomes lower with increasing amount of ethylene-propylene rubber (EPR). By increasing the amount of ethylene-propylene rubber (EPR), therefore, the percentage thermal shrinkage can be increased, and by reducing the amount of EPR, the percentage thermal shrinkage can be reduced.

When the sealant film for laminates contains block polypropylene, furthermore, heat resistance becomes lower with increasing amounts of additives, such as polyethylene and elastomers. By increasing the amounts of additives, therefore, the percentage thermal shrinkage can be increased, and by reducing the amounts of additives, the percentage thermal shrinkage can be reduced.

<Main Melting Peak Temperature>

The main melting peak temperature of the sealant film for laminates according to the present disclosure as measured according to JIS K7121: 2012 is preferably 140°C or above, more preferably 155°C. By ensuring that the main melting peak temperature is observed at 140°C or above in a sealant layer formed using the sealant film for laminates according to the present disclosure, the resistance to fall impact of a packaging container produced using the laminate can be improved. By ensuring that the main melting peak temperature is observed at 155°C or above in a sealant layer formed using the sealant film for laminates according to the present disclosure, furthermore, the heat resistance of a packaging container produced using the laminate can be improved.

Melting peak temperatures of the sealant film for laminates are obtained by differential scanning calorimetry (DSC). In the present disclosure, the conditions for measuring melting peak temperatures of the sealant film for laminates are as follows. First, a stand-up pouch is produced from a laminate made using the sealant film for laminates as its sealant layer, and the resulting pouch is filled with water through its opening. After the opening is hermetically sealed by heat sealing, the sealed pouch is subjected to hot-water retort treatment at a retort temperature of 121°C for a retort duration of 30 minutes. From the stand-up pouch after retort treatment, a portion of the sealant film corresponding to a portion of the sealant layer that has yet to be heat-sealed is isolated as a test specimen. In accordance with JIS K7121, the isolated sealant film is held at 20°C for 1 minute, and melting peak temperatures are measured while the temperature is increased from 20°C to 200°C at a temperature elevation rate of 10°C/minute. During this, the flow rate of the nitrogen gas is set to 20 ml/minute. The details of these conditions will be described in the Examples section. In this context, melting peak temperature refers to the temperature measured at the top of a melting peak in a DSC curve.

It should be noted that main melting peak temperature refers to the temperature measured at the top of the largest melting peak when multiple melting peaks are obtained.

The main melting peak temperature of the sealant film for laminates can be adjusted by the amount of ethylene-propylene rubber (EPR) when the sealant layer contains block polypropylene.

Specifically, when the sealant film for laminates contains block polypropylene, the main melting peak temperature can be shifted toward lower temperatures by increasing the amount of ethylene-propylene rubber (EPR), and can be shifted toward higher temperatures by reducing the amount of EPR.

The sealant film can be manufactured by, for example, a method known in the related art. The sealant film can be obtained by mixing the materials described above by an ordinary method and shaping the resulting mixture into a film by an ordinary method. The sealant film is preferably a film obtained through extrusion molding. The extrusion molding is preferably performed by the T-die method or inflation. Specifically, the materials constituting the sealant film are dried as necessary and then fed into a hot-melt extruder heated to a temperature equal to or higher than the melting points of the materials to cause the materials to melt. The molten materials are extruded to form a film through a die, such as a T-die, and the extruded film-shaped material is rapidly solidified, for example using a rotating cooling drum. In this manner, a single-layer or multilayer sealant film can be shaped.

The hot-melt extruder can be a single-screw extruder, a twin-screw extruder, a vented extruder, a tandem extruder, or another type of extruder according to the purpose. The temperature of the molten polymer during extrusion from the hot-melt extruder may be, for example, 200°C or above and 300°C or below or may be 220°C or above and 270°C or below.

[Laminate]

A laminate according to the present disclosure includes a base material (first base material) and a sealant layer.

The base material is a stretched base material containing polypropylene as its main component.

The sealant layer contains polypropylene as its main component.

The laminate according to the present disclosure is suitable for packaging material applications.

The laminate according to the present disclosure may include one base material or may include two or more base materials.

The laminate according to the present disclosure preferably further includes a second base material between the first base material and the sealant layer, thereby including a first base material, a second base material, and a sealant layer in this order in the thickness direction.

The first base material is a stretched base material containing polypropylene as its main component.

The second base material is a stretched base material containing polypropylene as its main component.

The stretched base material serving as the first base material and the stretched base material serving as the second base material may be identical or may be different.

In the following description, a stretched base material containing polypropylene as its main component will also be referred to as "polypropylene stretched base material."

In an embodiment, any one of the first base material or the second base material is a barrier base material, and the other of the first base material or the second base material is a polypropylene stretched base material. In another embodiment, both the first base material and the second base material may be barrier base materials, or both the first base material and the second base material may be polypropylene stretched base materials.

Fig. 3 to Fig. 20 are schematic cross-sectional views each illustrating an embodiment of a laminate.

The laminate 1 illustrated in Fig. 3 includes a barrier base material 20 as a base material, a bonding layer 40, and a sealant layer 30 in this order in the thickness direction. The barrier base material 20 includes a polypropylene stretched base material 22 and an inorganic oxide layer 24. In this example, the barrier base material 20 is positioned such that the polypropylene stretched base material 22 constitutes the outermost layer of the laminate 1, and that the inorganic oxide layer 24 faces the bonding layer 40 side. In this configuration, the inorganic oxide layer 24 and the bonding layer 40 may be in contact.

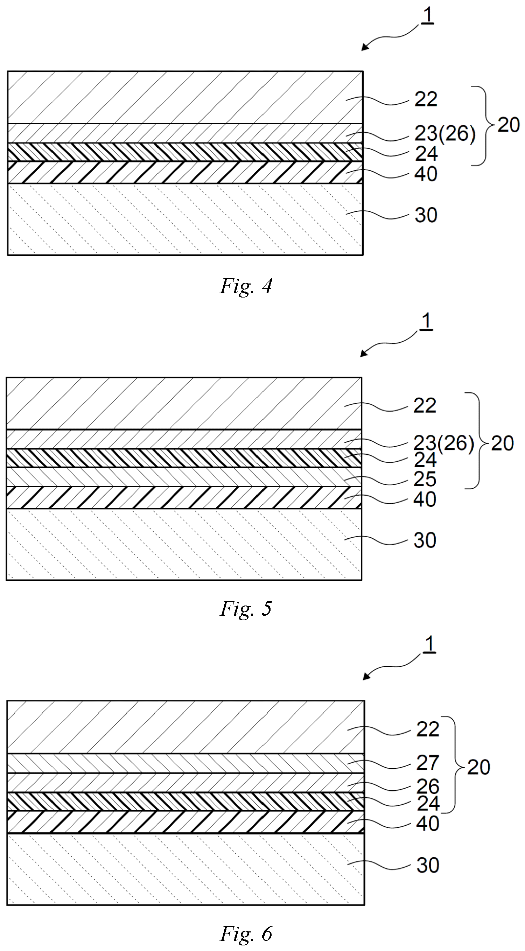

Fig. 4 is similar to Fig. 3, except that the barrier base material 20 includes a surface coating layer 23 or a surface resin layer 26 between the polypropylene stretched base material 22 and the inorganic oxide layer 24.

Fig. 5 is similar to Fig. 3, except that the barrier base material 20 includes a polypropylene stretched base material 22, a surface coating layer 23 or a surface resin layer 26, an inorganic oxide layer 24, and a coating layer 25 in this order in the thickness direction. In this example, the barrier base material 20 is positioned such that the coating layer 25 faces the bonding layer 40 side. The coating layer 25 and the bonding layer 40 may be in contact.

Fig. 6 is similar to Fig. 4, except that the barrier base material 20 includes an adhesive resin layer 27 between the polypropylene resin layer 22 and the surface resin layer 26.

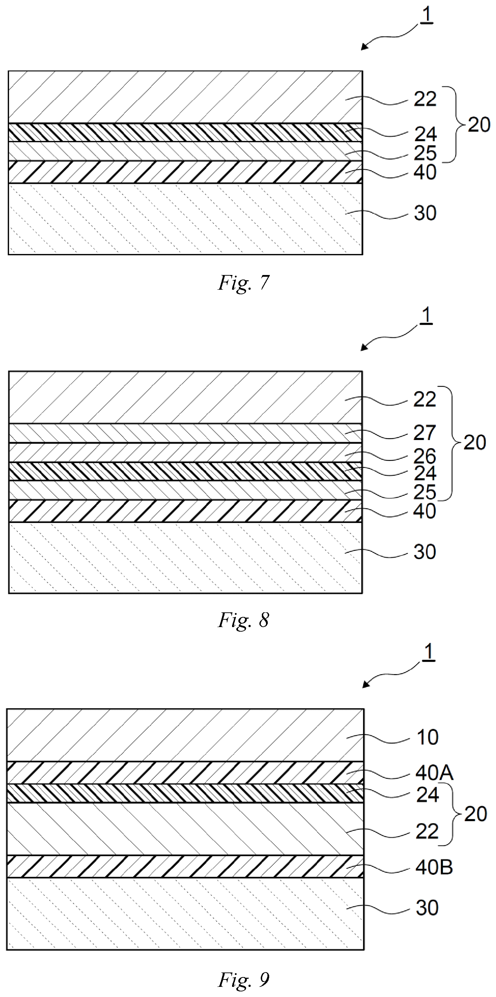

Fig. 7 is similar to Fig. 5, except that the barrier base material 20 includes a polypropylene resin layer 22, an inorganic oxide layer 24, and a coating layer 25 in this order in the thickness direction.

Fig. 8 is similar to Fig. 5, except that the barrier base material 20 includes an adhesive resin layer 27 between the polypropylene resin layer 22 and the surface resin layer 26.

The laminate 1 illustrated in Fig. 9 includes a polypropylene stretched base material 10 as a first base material, a bonding layer 40A, a barrier base material 20 as a second base material, a bonding layer 40B, and a sealant layer 30 in this order in the thickness direction. The barrier base material 20 includes a polypropylene stretched base material 22 and an inorganic oxide layer 24. In this example, the barrier base material 20 is positioned such that the polypropylene stretched base material 22 is in contact with the bonding layer 40B, and that the inorganic oxide layer 24 faces the bonding layer 40A side. The inorganic oxide layer 24 and the bonding layer 40A may be in contact.

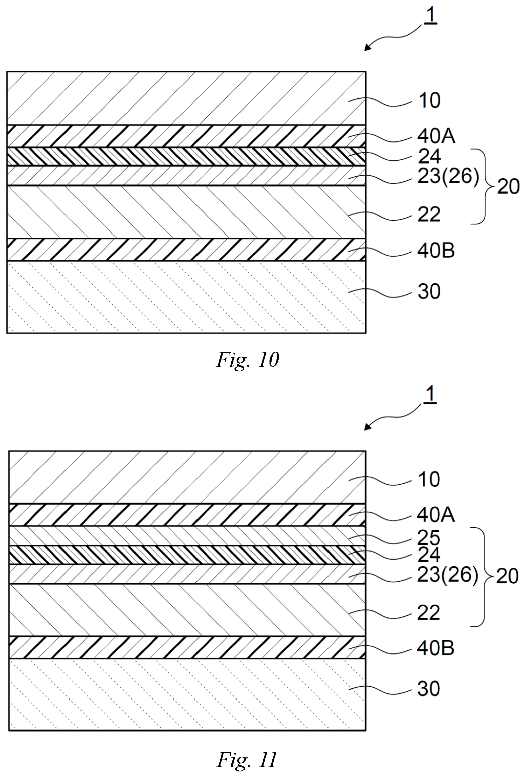

Fig. 10 is similar to Fig. 9, except that the barrier base material 20 includes a surface coating layer 23 or a surface resin layer 26 between the polypropylene stretched base material 22 and the inorganic oxide layer 24.

Fig. 11 is similar to Fig. 9, except that the barrier base material 20 includes a polypropylene stretched base material 22, a surface coating layer 23 or a surface resin layer 26, an inorganic oxide layer 24, and a coating layer 25 in this order in the thickness direction. In this example, the barrier base material 20 is positioned such that the coating layer 25 faces the bonding layer 40A side. The coating layer 25 and the bonding layer 40A may be in contact.

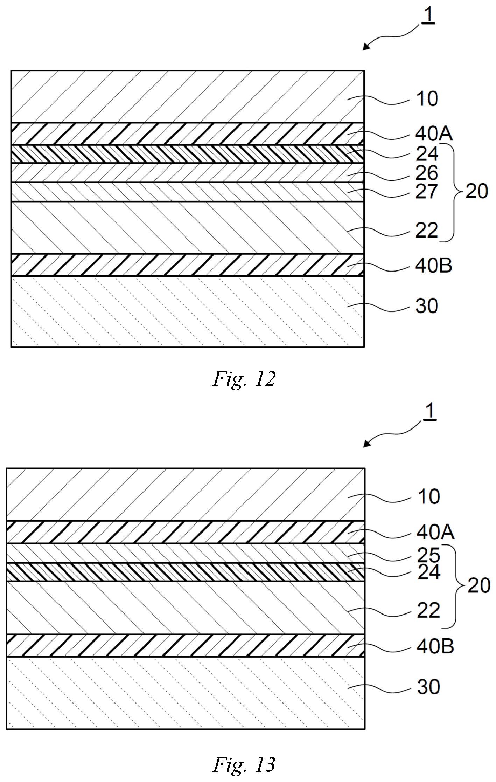

Fig. 12 is similar to Fig. 10, except that the barrier base material 20 includes an adhesive resin layer 27 between the polypropylene resin layer 22 and the surface resin layer 26.

Fig. 13 is similar to Fig. 10, except that the barrier base material 20 includes a polypropylene resin layer 22, an inorganic oxide layer 24, and a coating layer 25 in this order in the thickness direction.

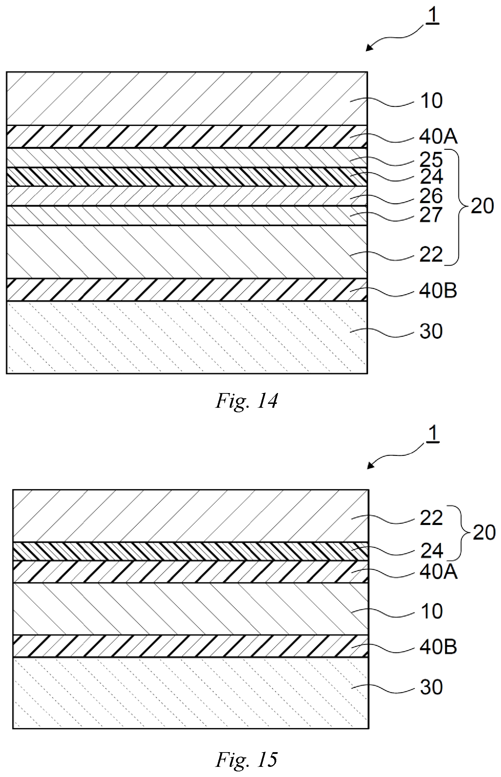

Fig. 14 is similar to Fig. 11, except that the barrier base material 20 includes an adhesive resin layer 27 between the polypropylene resin layer 22 and the surface resin layer 26.

The laminate 1 illustrated in Fig. 15 includes a barrier base material 20 as a first base material, a bonding layer 40A, a polypropylene stretched base material 10 as a second base material, a bonding layer 40B, and a sealant layer 30 in this order in the thickness direction. The barrier base material 20 includes a polypropylene stretched base material 22 and an inorganic oxide layer 24. In this example, the barrier base material 20 is positioned such that the polypropylene stretched base material 22 is positioned outermost in the laminate 1, and that the inorganic oxide layer 24 faces the bonding layer 40A side. The inorganic oxide layer 24 and the bonding layer 40A may be in contact.

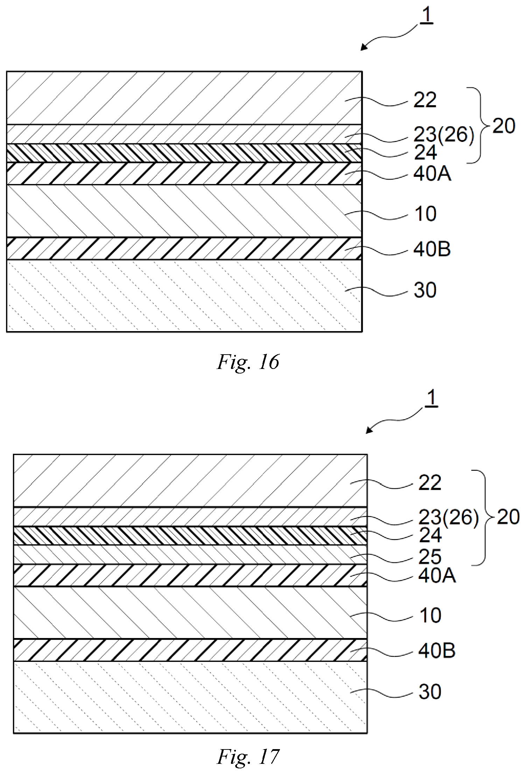

Fig. 16 is similar to Fig. 15, except that the barrier base material 20 includes a surface coating layer 23 or a surface resin layer 26 between the polypropylene stretched base material 22 and the inorganic oxide layer 24.

Fig. 17 is similar to Fig. 15, except that the barrier base material 20 includes a polypropylene stretched base material 22, a surface coating layer 23 or a surface resin layer 26, an inorganic oxide layer 24, and a coating layer 25 in this order in the thickness direction. In this example, the barrier base material 20 is positioned such that the coating layer 25 faces the bonding layer 40A side. The coating layer 25 and the bonding layer 40 may be in contact.

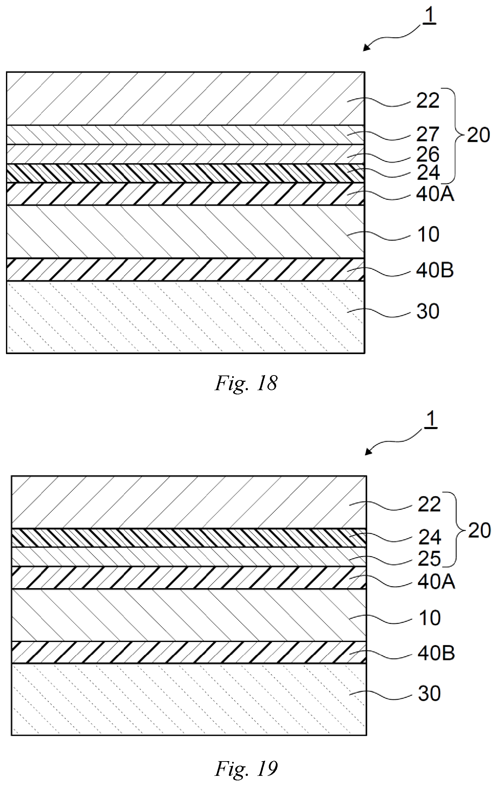

Fig. 18 is similar to Fig. 16, except that the barrier base material 20 includes an adhesive resin layer 27 between the polypropylene resin layer 22 and the surface resin layer 26.

Fig. 19 is similar to Fig. 17, except that the barrier base material 20 includes a polypropylene resin layer 22, an inorganic oxide layer 24, and a coating layer 25 in this order in the thickness direction.

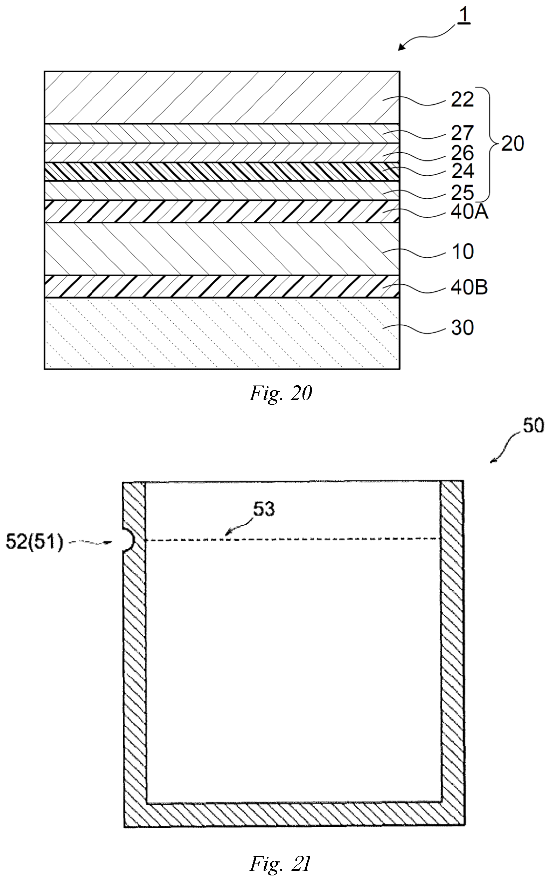

Fig. 20 is similar to Fig. 17, except that the barrier base material 20 includes an adhesive resin layer 27 between the polypropylene resin layer 22 and the surface resin layer 26.

Specific examples of layer configurations of the laminate according to the present disclosure will now be presented. "/" represents a boundary between a layer and another. "OPP film" represents a polypropylene stretched base material.

(1) OPP film/printed layer/bonding layer/sealant layer

(2) Barrier base material/printed layer/bonding layer/sealant layer

(3) OPP film/printed layer/bonding layer/barrier base material/bonding layer/sealant layer

(4) Barrier base material/printed layer/bonding layer/OPP film/bonding layer/sealant layer

(5) Barrier base material/printed layer/bonding layer/barrier base material/bonding layer/sealant layer

(6) OPP film/printed layer/bonding layer/OPP film/bonding layer/sealant layer

The laminate according to the present disclosure includes, in an embodiment, at least the three elements of a polypropylene stretched base material, a barrier base material, and a sealant layer. By virtue of this, gas barrier properties (oxygen barrier properties and water vapor barrier properties in particular) can be further improved.

When the first base material is a barrier base material, the first base material is, in an embodiment, positioned such that its inorganic oxide layer faces the sealant layer side, and that its polypropylene stretched base material faces opposite the sealant layer.

When the second base material is a barrier base material, the second base material is, in an embodiment, positioned such that its inorganic oxide layer faces the first base material side, and that its polypropylene stretched base material faces the sealant layer side, or, alternatively, the second base material is positioned such that its inorganic oxide layer faces the sealant layer side, and that its polypropylene stretched base material faces the first base material side. Of these, it is particularly preferred, when the second base material is a barrier base material, that the second base material be positioned such that its inorganic oxide layer faces the first base material side, and that its polypropylene stretched base material faces the sealant layer side, because in that case the deterioration of the inorganic oxide layer, for example, can be further limited.

In an embodiment of the laminate according to the present disclosure, the first base material is a polypropylene stretched base material, and the second base material is a barrier base material (see Fig. 9 to Fig. 14). In this embodiment, the laminate includes a polypropylene stretched base material, a barrier base material, and a sealant layer in this order in the thickness direction. A laminate in such a configuration exhibits higher gas barrier properties when subjected to, for example, heat treatment because the inorganic oxide layer is adequately protected during the treatment. A laminate in this embodiment, furthermore, exhibits a smaller percentage of thermal shrinkage in the case where it is subjected to heat treatment and thus is better in terms of suitability for shaping into a bag.

The percentage of the single polypropylene material (hereinafter also referred to as "the percentage monomaterialization") in the laminate according to the present disclosure is preferably 80% by mass or more, more preferably 85% by mass or more, further preferably 88% by mass or more, particularly preferably 90% by mass or more. When this is the case, a monomaterialized packaging container, for example, can be produced using the laminate, whereby the recycling suitability of the packaging container can be improved. The higher the percentage monomaterialization, the better; however, its upper limit may be, for example, 99% by mass or 98% by mass.

In the present disclosure, the above percentage monomaterialization refers to the percentage of the single polypropylene material relative to the total mass of the laminate. When a layer contains polypropylene as its main component (i.e., more than 50% by mass), however, the above percentage monomaterialization is calculated assuming that polypropylene constitutes 100% by mass of this layer. For example, in the case of a sealant layer composed of 80% by mass polypropylene, 5% by mass thermoplastic elastomer, and 15% by mass polyethylene, the above percentage monomaterialization is calculated assuming that the sealant layer is composed of 100% by mass polypropylene.

<Polypropylene Stretched Base Material>

The polypropylene stretched base material contains at least one type of polypropylene as its main component.

The polypropylene may be any of homopolypropylene, random polypropylene, or block polypropylene or may be a mixture of two or more selected from these. The polypropylene may be biomass-derived polypropylene and/or recycled polypropylene. Homopolypropylene is a polymer solely composed of propylene. Random polypropylene is a random polypropylene composed of propylene and monomer(s) such as an $\alpha$-olefin other than propylene. Block polypropylene is a type of polypropylene having a polymer block formed of propylene and a polymer block formed of at least monomer(s) such as an $\alpha$-olefin other than propylene. The polymer block formed of at least monomer(s) such as an $\alpha$-olefin other than propylene may be a polymer block formed of propylene and an $\alpha$-olefin other than propylene. The details of $\alpha$-olefins are as described above.

Among types of polypropylene, random polypropylene is particularly preferred when considered from the viewpoint of transparency. When priority is given to the rigidity and heat resistance of the packaging container, homopolypropylene is preferred, and when priority is given to the impact resistance of the packaging container, block polypropylene is preferred. In the present disclosure, homopolypropylene and block polypropylene are more preferred among these types of propylene from the viewpoints of heat resistance and impact resistance.

The melt flow rate (MFR) of the polypropylene is preferably 0.1 g/10 minutes or more, more preferably 0.3 g/10 minutes or more, and preferably is 50 g/10 minutes or less, more preferably 30 g/10 minutes or less, for film formation and workability reasons. For example, the MFR is 0.1 g/10 minutes or more and 50 g/10 minutes or less. The MFR of the polypropylene is measured under the conditions of a temperature of 230°C and a load of 2.16 kg according to method A in JIS K7210-1: 2014.

The percentage of polypropylene in the polypropylene stretched base material is preferably more than 50% by mass, more preferably 60% by mass or more, further preferably 70% by mass or more, still more preferably 80% by mass or more, particularly preferably 85% by mass or more, 90% by mass or more, or 95% by mass or more.

The polypropylene stretched base material may contain resin materials other than polypropylene. Examples of resin materials include polyolefins other than polypropylene, such as polyethylene, acrylic resins, vinyl resins, cellulose resins, polyamides, polyesters, and ionomer resins.

The polypropylene stretched base material is a polypropylene base material that has undergone stretching treatment. A laminate including a polypropylene stretched base material is superior in, for example, heat resistance, impact resistance, waterproofness, and dimensional stability and is suitable as, for example, a packaging material constituting a packaging container intended to undergo retort treatment or boiling treatment.

The stretching treatment may be uniaxial orientation or may be biaxial orientation.

The stretch ratio when stretching is performed in the machine direction (the direction of flow of the base material, or the MD direction) is preferably 2 or greater, more preferably 5 or greater, and preferably is 15 or less, more preferably 13 or less. The stretch ratio when stretching is performed in the transverse direction (the direction perpendicular to the MD direction, or the TD direction) is preferably 2 or greater, preferably 5 or greater, and preferably is 15 or less, more preferably 13 or less. By setting the stretch ratios to 2 or greater, the strength and heat resistance of the base material can be improved, and, furthermore, suitability for printing on the base material can be improved. From the viewpoint of the fracture limits of the base material, it is preferred that the stretch ratios be 15 or less.

The polypropylene stretched base material is, for example, a biaxially oriented base material.

The polypropylene stretched base material may have undergone surface treatment. Through this, adhesion between the polypropylene stretched base material and another layer, for example, can be improved. Examples of methods for surface treatment include physical treatments, such as corona discharge treatment, ozonation, low-temperature plasma treatment using, for example, an oxygen gas and/or a nitrogen gas, and glow discharge treatment; and chemical treatments, such as oxidation treatment using chemicals.

An adhesion-promoting layer may be provided on the surface of the polypropylene stretched base material.

The polypropylene stretched base material may have a single-layer structure or may have a multilayer structure.

The thickness of the polypropylene stretched base material is preferably 10 $\mu$m or more, more preferably 15 $\mu$m or more, and preferably is 100 $\mu$m or less, more preferably 50 $\mu$m or less. For example, the thickness is 10 $\mu$m or more and 100 $\mu$m or less. A laminate that includes a stretched base material having a thickness equal to or greater than the lower limits is superior in, for example, strength and heat resistance. A laminate that includes a stretched base material having a thickness equal to or smaller than the upper limits is superior in, for example, workability.

<Barrier Base Material>

The barrier base material includes a polypropylene stretched base material and an inorganic oxide layer. The barrier base material includes, for example, a polypropylene stretched base material and an inorganic oxide layer provided on one surface of the stretched base material. The barrier base material may include a surface coating layer between the polypropylene stretched base material and the inorganic oxide layer. The barrier base material may include a coating layer on the inorganic oxide layer. The barrier base material may have transparency.

(Polypropylene Stretched Base Material)

An example of a polypropylene stretched base material included in the barrier base material is a polypropylene stretched base material as described in the <Polypropylene Stretched Base Material> section. The polypropylene stretched base material serving as the first base material and the polypropylene stretched base material serving as the second base material may be identical or may be different.

The polypropylene stretched base material included in the barrier base material may be a stretched base material in a different configuration that includes, for example, a polypropylene layer, an adhesive resin layer as desired, and a surface resin layer as described later in this order. In this embodiment, the barrier base material includes the stretched base material in a different configuration and an inorganic oxide layer provided on the surface resin layer of the stretched base material. In this embodiment, the barrier base material includes a polypropylene layer, an adhesive resin layer as desired, a surface resin layer, and an inorganic oxide layer in this order. The stretched base material in a different configuration is, in an embodiment, a coextruded stretched resin film. A coextruded stretched resin film can be produced by, for example, shaping materials into a film by utilizing the T-die method, inflation, or other techniques to obtain a multilayer film and then stretching this multilayer film.

The stretching treatment for the stretched base material in a different configuration may be uniaxial orientation or may be biaxial orientation.

The stretch ratio when stretching is performed in the MD direction is preferably 2 or greater, more preferably 5 or greater, and preferably is 15 or less, more preferably 13 or less. The stretch ratio when stretching is performed in the TD direction is preferably 2 or greater, preferably 5 or greater, and preferably is 15 or less, more preferably 13 or less.

(Surface Coating Layer)

The barrier base material may include a surface coating layer containing a resin material having a polar group between the polypropylene stretched base material and the inorganic oxide layer. Such a barrier base material is superior in the adhesion of the inorganic oxide layer and is also superior in gas barrier properties. Such a barrier base material includes a polypropylene stretched base material, a surface coating layer, and an inorganic oxide layer in this order.

Polar group refers to a group containing one or more heteroatoms, and examples include an ester group, an epoxy group, a hydroxyl group, an amino group, an amide group, a urethane group, a carboxy group, a carbonyl group, a carboxylic anhydride group, a sulfo group, a thiol group, and a halogen group. Of these, a carboxy group, a carbonyl group, an ester group, a hydroxyl group, an amino group, an amide group, and a urethane group are particularly preferred, and a carboxy group, a hydroxyl group, an amide group, and a urethane group are more preferred.

Examples of resin materials having a polar group include ethylene-vinyl alcohol copolymers (EVOH), polyvinyl alcohol (PVA), polyesters, polyethyleneimines, hydroxyl-containing acrylic resins, nylon 6, nylon 6,6, MXD nylon, amorphous nylon, and other polyamides, and polyurethanes. Of these, ethylene-vinyl alcohol copolymers, polyvinyl alcohol, hydroxyl-containing acrylic resins, polyamides, and polyurethanes are more preferred.

The surface coating layer can be formed using, for example, a water-based emulsion or a solvent-based emulsion. Examples of water-based emulsions include a polyamide emulsion, a polyethylene emulsion, and a polyurethane emulsion. Examples of solvent-based emulsions include an acrylic resin emulsion and a polyester emulsion.

The percentage of the resin material having a polar group in the surface coating layer is preferably 70% by mass or more, more preferably 80% by mass or more, further preferably 90% by mass or more.

The surface coating layer may contain resin materials as mentioned above other than the resin material having a polar group.

The surface coating layer may contain additives as mentioned above.

The percentage of the thickness of the surface coating layer relative to the total thickness of the polypropylene stretched base material and the surface coating layer is preferably 0.08% or more, more preferably 0.2% or more, further preferably 1% or more, and preferably is 20% or less, more preferably 15% or less, further preferably 10% or less, still more preferably 5% or less. For example, the percentage is 0.08% or more and 20% or less. The thickness of the surface coating layer is preferably 0.02 $\mu$m or more, more preferably 0.05 $\mu$m or more, further preferably 0.1 $\mu$m or more, still more preferably 0.2 $\mu$m or more, and preferably is 10 $\mu$m or less, more preferably 5 $\mu$m or less. For example, the thickness is 0.02 $\mu$m or more and 10 $\mu$m or less. When this percentage or thickness is equal to or greater than the lower limits, the adhesion of the inorganic oxide layer, for example, can be improved, gas barrier properties can be improved, and, furthermore, the lamination strength of the laminate can be improved. When this percentage or thickness is equal to or smaller than the upper limits, the workability of the barrier base material and the recyclability of the laminate, for example, can be improved.

For example, by shaping polypropylene or a resin composition containing polypropylene into a film by utilizing the T-die method, inflation, or other techniques to obtain a polypropylene base material, then stretching this base material, and applying a coating liquid for forming a surface coating layer to the resulting stretched base material and drying it, a resin base material having a polypropylene stretched base material and a surface coating layer can be produced.

(Polypropylene Layer, Surface Resin Layer, and Adhesive Resin Layer)

In the stretched base material in a different configuration, the polypropylene layer contains polypropylene as its main component. The details of the polypropylene are as described above, and their detailed description in this section is omitted. The percentage of polypropylene in the polypropylene layer is preferably more than 50% by mass, more preferably 60% by mass or more, further preferably 70% by mass or more, still more preferably 80% by mass or more, particularly preferably 85% by mass or more, 90% by mass or more, or 95% by mass or more.

The polypropylene layer may contain resin materials as mentioned above other than polypropylene.

The polypropylene layer may contain additives as mentioned above.

The polypropylene layer may have a single-layer structure or may have a multilayer structure. The thickness of the polypropylene layer is preferably 10 μm or more, more preferably 15 μm or more, and preferably is 100 μm or less, more preferably 50 μm or less. For example, the thickness is 10 μm or more and 100 μm or less.

The surface resin layer contains, in its first form, a resin material having a melting point of 180°C or above (hereinafter also referred to as "high-melting resin material"). By providing a surface resin layer containing a high-melting resin material between the polypropylene layer and the inorganic oxide layer, the adhesion of the inorganic oxide layer formed on this surface resin layer, for example, can be improved, and gas barrier properties can also be improved at the same time.

A packaging container produced using a laminate including such a surface resin layer, furthermore, has high lamination strength.

In an embodiment, the surface resin layer may be provided on the polypropylene resin layer. That is, the surface resin layer may be adjacent to the polypropylene resin layer.

In an embodiment, when an adhesive resin layer is included between the polypropylene resin layer and the surface resin layer, the adhesive resin layer may be provided on the polypropylene resin layer, and the surface resin layer may be provided on the adhesive resin layer. That is, the adhesive resin layer may be adjacent to the polypropylene resin layer, and the surface resin layer may be adjacent to the adhesive resin layer.

The melting point of the high-melting resin material is preferably 185°C or above, more preferably 190°C or above, further preferably 205°C or above. When the melting point is equal to or higher than the lower limits, the adhesion of the inorganic oxide layer, for example, can be improved, gas barrier properties can be improved, and, furthermore, the lamination strength of the laminate can be improved. The melting point of the high-melting resin material is preferably 265°C or below, more preferably 260°C or below, further preferably 250°C or below. When this is the case, the film formation of the stretched base material, for example, can be improved.

Herein, the melting point, for example of a high-melting resin material, can be measured according to JIS K7121: 2012 (Testing Methods for Transition Temperatures of Plastics). Specifically, a DSC curve is measured at a temperature elevation rate of 10°C/minute using a differential scanning calorimeter (DSC), from which a melting peak temperature as the melting point can be determined.

The difference between the melting point TA of the high-melting resin material contained in the surface resin layer and the melting point TB of the polypropylene contained in the polypropylene resin layer is preferably 20°C or more. The difference between the melting point TA and the melting point TB is preferably 80°C or less, more preferably 60°C or less.

When the difference between the melting point TA and the melting point TB is equal to or greater than the lower limit, adhesion between the surface resin layer and the vapor deposition film can be further improved, and gas barrier properties can be further improved. The lamination strength of the packaging container, furthermore, can be further improved.

In addition, when the difference between the melting point TA and the melting point TB is equal to or smaller than the upper limits, the film formation of the polypropylene resin base material can be further improved.

The high-melting resin material preferably has a polar group. Polar group refers to a group containing one or more heteroatoms, and examples include an ester group, an epoxy group, a hydroxyl group, an amino group, an amide group, a urethane group, a carboxy group, a carbonyl group, a carboxylic anhydride group, a sulfo group, a thiol group, and a halogen group. Of these, a hydroxyl group, an ester group, an amino group, an amide group, a carboxy group, and a carbonyl group are particularly preferred, with an amide group being more preferred.

The high-melting resin material only needs to have a melting point of 180°C or above, and examples include polyolefins, vinyl resins, acrylic resins, polyamides, polyimides, polyesters, cellulose resins, and ionomer resins. For example, resin materials having a melting point of 180°C or above and having a polar group are preferred, with ethylene-vinyl alcohol copolymers, polyvinyl alcohol, polyesters, and nylon 6, nylon 6,6, MXD nylon, amorphous nylon, and other polyamides being more preferred.

By using such a resin material, the adhesion of the vapor deposition film formed on the surface resin layer can be significantly improved, and decreases in gas barrier properties can be effectively limited.

In an embodiment, the high-melting resin material is preferably a polyamide. By using a polyamide as a high-melting resin material, decreases in gas barrier properties can be limited even after the laminate is bent, and the heat resistance of the laminate can be improved. Decreases in gas barrier properties, furthermore, can be limited even after the laminate is subjected to retort treatment and boiling treatment, which will be described later. The high-melting resin material is more preferably nylon 6.

In the first form, the percentage of the high-melting resin material in the surface resin layer is preferably 70% by mass or more, more preferably 80% by mass or more, further preferably 90% by mass or more.

The surface resin layer contains, in its second form, at least one type of random polypropylene composed of propylene and an α-olefin other than propylene. By providing a surface resin layer containing such a type of random polypropylene between the polypropylene layer and an adhesive agent layer or second adhesive agent layer, adhesion strength between the sealant layer and the polypropylene stretched base material (i.e., the barrier base material) can be improved, and the impact resistance of the laminate can also be improved at the same time.

Examples of such types of random polypropylene include propylene-ethylene random polypropylene and propylene-ethylene-butene random polypropylene. Any one or a mixture of two or more of such types can be used as the random polypropylene.

In propylene-ethylene random polypropylene, the percentage of constituent units derived from ethylene is preferably 2% by mass or more, more preferably 4% by mass or more. This percentage, furthermore, is preferably 50% by mass or less, more preferably 40% by mass or less. By ensuring that the percentage falls within these preferred ranges, resistance to fall impact, for example, can be further improved. In the present disclosure, the percentage of constituent units can be measured by, for example, thermal gradient interaction chromatography (TGIC).

In propylene-ethylene-butene random polypropylene, the percentage of constituent units derived from ethylene and constituent units derived from butene is preferably 2% by mass or more, more preferably 4% by mass or more. This percentage, furthermore, is preferably 50% by mass or less, more preferably 40% by mass or less.

In the second form, the percentage of the random polypropylene in the surface resin layer is 50% by mass or more, preferably 70% by mass or more, more preferably 80% by mass or more, further preferably 90% by mass or more, relative to the total amount of the surface resin layer. By virtue of containing the random polypropylene at a percentage of 50% by mass or more, the surface resin layer exhibits sufficient adhesion strength.

The surface resin layer may contain resin materials as mentioned above other than the high-melting resin material and the random polypropylene composed of propylene and an $\alpha$-olefin other than propylene.

The surface resin layer may contain additives as mentioned above.

The surface resin layer may have undergo surface treatment as mentioned above.

The percentage of the thickness of the surface resin layer relative to the total thickness of the stretched base material in a different configuration, which includes a polypropylene layer and a surface resin layer, is preferably 1% or more, more preferably 1.5% or more, and preferably is 10% or less, more preferably 5% or less. For example, the percentage is 1% or more and 10% or less. The thickness of the surface resin layer is preferably 0.1 $\mu$m or more, more preferably 0.2 $\mu$m or more, and preferably is 5 $\mu$m or less, more preferably 4 $\mu$m or less. For example, the thickness is 0.1 $\mu$m or more and 5 $\mu$m or less. When this percentage or thickness is equal to or greater than the lower limits, the adhesion of the inorganic oxide layer, for example, can be improved, gas barrier properties can be improved, and, furthermore, the lamination strength of the laminate can be improved. When this percentage or thickness is equal to or smaller than the upper limits, the film formation and workability of the stretched base material in a different configuration and the recyclability of the laminate, for example, can be improved.

The stretched base material in a different configuration may include an adhesive resin layer between the polypropylene layer and the surface resin layer. Through this, adhesion between these layers can be improved. The thickness of the adhesive resin layer is, for example, 1 $\mu$m or more and 15 $\mu$m or less. The adhesive resin layer can be formed using, for example, an adhesive resin. Examples of adhesive resins include polyethers, polyesters, polyurethanes, silicone resins, epoxy resins, vinyl resins, phenolic resins, polyolefins, and acid-modified forms of polyolefins. Of these, polyolefins and their acid-modified forms are particularly preferred from the viewpoint of the recyclability of the laminate, with polypropylene and its acid-modified forms being more preferred. Polypropylene used in an adhesive resin layer can be a commercially available one. For example, ADMER resins, manufactured by Mitsui Chemicals, Inc., can be used.

(Inorganic Oxide Layer)

The barrier base material includes an inorganic oxide layer. The inorganic oxide layer contains one or two or more inorganic oxides and is, for example, a vapor deposition film of inorganic oxide(s). A laminate including a barrier base material is superior in gas barrier properties, specifically oxygen barrier properties and water vapor barrier properties. With a packaging container produced using such a laminate, oxidative degradation of the contents in the packaging container can be limited, and a decrease in the mass of the contents can be reduced. The barrier base material may include, for example, the inorganic oxide layer on a surface coating layer or may include the inorganic oxide layer on a surface resin layer.

Examples of inorganic oxides include aluminum oxide (alumina), silicon oxide (silica), magnesium oxide, calcium oxide, zirconium oxide, titanium oxide, boron oxide, hafnium oxide, barium oxide, and silicon oxycarbide (carbon-containing silicon oxide). Of these, silica, silicon oxycarbide, and alumina are particularly preferred.

In an embodiment, it is more preferred that the inorganic oxide be silica because in that case aging treatment after the formation of the inorganic oxide layer is unnecessary. In an embodiment, it is more preferred that the inorganic oxide be carbon-containing silicon oxide because in that case decreases in gas barrier properties can be limited even when the laminate is bent.

The thickness of the inorganic oxide layer is preferably 1 nm or more, more preferably 5 nm or more, further preferably 10 nm or more, and preferably is 150 nm or less, more preferably 60 nm or less, further preferably 40 nm or less. For example, the thickness is 1 nm or more and 150 nm or less. A laminate that includes an inorganic oxide layer having a thickness equal to or greater than the lower limits is superior in, for example, oxygen barrier properties and water vapor barrier properties. With a laminate that includes an inorganic oxide layer having a thickness equal to or smaller than the upper limits, the development of cracks in the inorganic oxide layer, for example, can be reduced. Such a laminate, furthermore, is superior in recyclability.

The surface of the inorganic oxide layer may have undergone surface treatment as mentioned above.

Examples of methods for forming the inorganic oxide layer, an inorganic oxide deposition film in particular, include physical vapor deposition (PVD) methods, such as vacuum deposition, sputtering, and ion plating, and chemical vapor deposition (CVD) methods, such as plasma chemical vapor deposition, thermal chemical vapor deposition, and photochemical vapor deposition.

The inorganic oxide layer may be single-layer, formed through one deposition step, or may be multilayer, formed through multiple deposition steps. When the inorganic oxide layer is multilayer, the layers may be composed of the same inorganic oxide(s) or may be composed of different inorganic oxides. The layers may be formed using the same method or may be formed using different methods.

The inorganic oxide layer is preferably a vapor deposition film formed by CVD, more preferably a carbon-containing silicon oxide deposition film formed by CVD. A laminate including such an inorganic oxide layer is superior in, for example, resistance to bending.

A carbon-containing silicon oxide deposition film contains silicon, oxygen, and carbon.

In an embodiment of a carbon-containing silicon oxide deposition film, the percentage of carbon C is preferably 3% or more, more preferably 5% or more, further preferably 10% or more, and preferably is 50% or less, more preferably 40% or less, further preferably 35% or less, relative to a total of 100% of the three elements of silicon, oxygen, and carbon. For example, the percentage of carbon C is 3% or more and 50% or less. By setting the percentage of carbon C within these ranges, decreases in gas barrier properties, for example, can be limited even when the laminate is bent.

Herein, the percentages of elements are based on the number of moles.

In an embodiment of a carbon-containing silicon oxide deposition film, the percentage of silicon Si is preferably 1% or more, more preferably 3% or more, further preferably 8% or more, and preferably is 45% or less, more preferably 38% or less, further preferably 33% or less, relative to a total of 100% of the three elements of silicon, oxygen, and carbon. For example, the percentage of silicon Si is 1% or more and 45% or less. The percentage of oxygen O is preferably 10% or more, more preferably 20% or more, further preferably 25% or more, and preferably is 70% or less, more preferably 65% or less, further preferably 60% or less, relative to a total of 100% of the three elements of silicon, oxygen, and carbon. For example, the percentage of oxygen O is 10% or more and 70% or less. By setting the percentage of silicon Si and the percentage of oxygen O within these ranges, decreases in gas barrier properties, for example, can be further limited even when the laminate is bent.

In an embodiment of a carbon-containing silicon oxide deposition film, the percentage of oxygen O is preferably higher than the percentage of carbon C, and the percentage of silicon Si is preferably lower than the percentage of carbon C. The percentage of oxygen O is preferably higher than the percentage of silicon Si. That is, the percentages preferably become lower in the order of percentage O, percentage C, and percentage Si. When this is the case, decreases in gas barrier properties, for example, can be further limited even when the laminate is bent.

Percentage C, percentage Si, and percentage O in a carbon-containing silicon oxide deposition film can be measured through a narrow-scan analysis under the following measurement conditions by X-ray photoelectron spectroscopy (XPS).

(Measurement Conditions)

Equipment used: "ESCA-3400" (manufactured by Kratos Analytical Ltd.)

[1] Spectral collection conditions

Incident X-rays: MgK$\alpha$ (non-monochromated X-rays; hv = 1253.6 eV)

X-ray power: 150 W (10 kV·15 mA)

Region measured: Approximately 6 mm$\phi$

Photoelectron acceptance angle: 90 degrees

[2] Ion sputtering conditions

Ion species: Ar+

Pressure for Ar gas introduction: $2.0 \times 10^{-2}$ Pa

Acceleration voltage: 0.2 (kV)

Emission current: 20 (mA)

Ion sputtering duration: 30 seconds, followed by spectral collection

(Coating Layer)

The barrier base material may further include a coating layer on the inorganic oxide layer. That is, the barrier base material may further include a coating layer on the surface of the inorganic oxide layer opposite the surface facing the polypropylene stretched base material. A laminate including such a barrier base material is superior in, for example, oxygen barrier properties and water vapor barrier properties.

The coating layer contains, in an embodiment, a resin component. Examples of resin components include polyolefins, such as polyethylene, polypropylene, polybutene, and polymethylpentene, vinyl resins, acrylic resins, polyesters, urethane resins, melamine resins, and epoxy resins. The percentage of the resin component in the coating layer is preferably more than 50% by mass, more preferably 75% by mass or more, and preferably is 95% by mass or less, more preferably 90% by mass or less. For example, the percentage is more than 50% by mass and 95% by mass or less.

The coating layer may contain additives as mentioned above.

The thickness of the coating layer is preferably 0.01 $\mu$m or more, more preferably 0.05 $\mu$m or more, further preferably 0.1 $\mu$m or more, and preferably is 5 $\mu$m or less, more preferably 3 $\mu$m or less, further preferably 1 $\mu$m or less. For example, the thickness is 0.01 $\mu$m or more and 5 $\mu$m or less. Such a coating layer is superior in, for example, scratch resistance.

The coating layer can be formed by, for example, applying a coating liquid for a coating layer on the surface of the inorganic oxide layer and drying the applied liquid. The coating liquid for a coating layer can be prepared by, for example, mixing a resin component as described above, optionally additives, and a solvent. The details of these components are as described above. Examples of methods for applying the coating liquid for a coating layer include known application methods. Examples of methods for drying the applied coating liquid for a coating layer include methods in which heat is applied, such as hot-air drying, hot-roller drying, and infrared irradiation. The drying temperature may be 50°C or above and, furthermore, may be 150°C or below.

The coating layer may be, in an embodiment, a barrier coating layer containing a gas barrier resin. Examples of gas barrier resins include ethylene-vinyl alcohol copolymers, polyvinyl alcohol, polyacrylonitrile, polyesters, nylon 6, nylon 6,6, polymeta-xylylene adipamide, and other polyamides, polyurethanes, and (meth)acrylic resins. Of these, polyvinyl alcohol is particularly preferred from the viewpoints of oxygen barrier properties and water vapor barrier properties.

By incorporating polyvinyl alcohol in the barrier coating layer, furthermore, the development of cracks in the inorganic oxide layer can be effectively prevented.

The percentage of the gas barrier resin in the barrier coating layer is preferably 50% by mass or more, more preferably 60% by mass or more, further preferably 70% by mass or more, still more preferably 75% by mass or more, and preferably is 95% by mass or less, more preferably 90% by mass or less. For example, the percentage is 50% by mass or more and 90% by mass or less. Such a barrier coating layer is superior in, for example, gas barrier properties.

The barrier coating layer may contain additives as mentioned above.

The thickness of the barrier coating layer containing a gas barrier resin is preferably 0.01 $\mu$m or more, more preferably 0.1 $\mu$m or more, and preferably is 10 $\mu$m or less, more preferably 5 $\mu$m or less. For example, the thickness is 0.01 $\mu$m or more and 10 $\mu$m or less. A barrier base material that includes a barrier coating layer having a thickness equal to or greater than the lower limits is superior in, for example, gas barrier properties. With a barrier base material that includes a barrier coating layer having a thickness equal to or smaller than the upper limits, the workability and recyclability of the laminate, for example, can be improved.

When the thickness of the barrier coating layer falls within these ranges, furthermore, recycling suitability is not impaired even when the gas barrier resin is a resin material different from polypropylene.

The barrier coating layer can be formed by, for example, dissolving or dispersing the materials, such as a gas barrier resin, in water or an appropriate organic solvent, applying the resulting coating liquid to the surface of the inorganic oxide layer, and drying the applied liquid. The barrier coating layer can also be formed by, for example, applying a commercially available barrier coating agent and drying the applied agent.

The coating layer may be, in an embodiment, a gas barrier coating film formed by subjecting a composition containing a metal alkoxide and at least one water-soluble polymer to polycondensation treatment by the sol-gel method in the presence of, for example, a sol-gel catalyst, water, and an organic solvent. A barrier base material including a gas barrier coating film on the inorganic oxide layer is superior in, for example, gas barrier properties. The gas barrier coating film contains a hydrolysis and polycondensation product resulting from the hydrolysis and polycondensation of the metal alkoxide and other materials through the sol-gel process. By providing such a gas barrier coating film on the inorganic oxide layer, the development of cracks in the inorganic oxide layer, for example, can be effectively reduced.

The metal alkoxide is represented by, for example, formula (1).

$$R^1{}_nM(OR^2)_m \qquad (1)$$

In formula (1), $R^1$ and $R^2$ each independently represent an organic group containing one or more and eight or fewer carbons, M represents a metallic atom, n represents an integer of 0 or greater, m represents an integer of 1 or greater, and n + m represents the valence of M. Examples of organic groups for $R^1$ and $R^2$ include alkyl groups containing one or more and eight or fewer carbons, such as a methyl group, an ethyl group, an n-propyl group, an isopropyl group, an n-butyl group, an isobutyl group, a sec-butyl group, a t-butyl group, an n-hexyl group, and an n-octyl group. The metallic atom M is, for example, silicon, zirconium, titanium, or aluminum. Examples of metal alkoxides include alkoxysilanes, such as tetramethoxysilane, tetraethoxysilane, tetrapropoxysilane, and tetrabutoxysilane.

Examples of water-soluble polymers include hydroxyl-containing polymers, such as polyvinyl alcohol and ethylene-vinyl alcohol copolymers. Depending on the desired physical characteristics, such as oxygen barrier properties, water vapor barrier properties, waterproofness, and weatherability, any one of polyvinyl alcohol or an ethylene-vinyl alcohol copolymer may be used, both may be used in combination, or a gas barrier coating film obtained using polyvinyl alcohol and a gas barrier coating film obtained using an ethylene-vinyl alcohol copolymer may be stacked. The amount of water-soluble polymer used is preferably 3 parts by mass or more, more preferably 5 parts by mass or more, and preferably is 500 parts by mass or less, relative to 100 parts by mass of the metal alkoxide. By setting the amount of water-soluble polymer in the gas barrier coating film equal to or greater than the lower limits, the oxygen barrier properties and water vapor barrier properties of the laminate can be further improved. By setting the amount of water-soluble polymer in the gas barrier coating film equal to or smaller than the upper limit, furthermore, the ease of formation of the gas barrier coating film can be improved.

A silane coupling agent may be used together with the metal alkoxide. The silane coupling agent can be a known organoalkoxysilane containing an organic reactive group. Organoalkoxysilanes having an epoxy group are preferred, with examples including γ-glycidoxypropyltrimethoxysilane, γ-glycidoxypropylmethyldiethoxysilane, and β-(3,4-epoxycyclohexyl)ethyltrimethoxysilane. The amount of silane coupling agent used is preferably 1 part by mass or more and 20 parts by mass or less relative to 100 parts by mass of the metal alkoxide.

In the gas barrier coating film, the ratio of the metal alkoxide to the water-soluble polymer (metal alkoxide/water-soluble polymer) is preferably 4.5 or less, more preferably 3.5 or less, and preferably is 1.0 or greater, more preferably 1.7 or greater, on a mass basis. For example, the ratio is 1.0 or greater and 4.5 or less.

By setting the ratio of the metal alkoxide to the water-soluble polymer equal to or smaller than the upper limits, decreases in gas barrier properties can be limited even after the laminate is bent.

By setting the ratio of the metal alkoxide to the water-soluble polymer equal to or greater than the lower limits, the heat resistance of the laminate can be improved. Decreases in gas barrier properties, furthermore, can be limited even after the laminate is subjected to retort treatment and boiling treatment.

It should be noted that this ratio is a ratio on a solids basis.

On the surface of the gas barrier coating film, the ratio between silicon atoms and carbon atoms (Si/C) as measured by X-ray photoelectron spectroscopy (XPS) is preferably 1.60 or less, more preferably 1.35 or less, and preferably is 0.50 or greater, more preferably 0.90 or greater.

By setting the ratio between silicon atoms and carbon atoms equal to or smaller than the upper limits, decreases in gas barrier properties can be limited even after the laminate is bent.

By setting the ratio between silicon atoms and carbon atoms equal to or greater than the lower limits, the heat resistance of the laminate can be improved. Decreases in gas barrier properties, furthermore, can be limited even after the laminate is subjected to retort treatment and boiling treatment.

These ranges of ratios between silicon atoms and carbon atoms can be achieved by adjusting the ratio of the metal alkoxide to the water-soluble polymer as appropriate.

It should noted that herein, the ratio between silicon atoms and carbon atoms is based on the number of moles.

The ratio between silicon atoms and carbon atoms in X-ray photoelectron spectroscopy (XPS) can be measured through a narrow-scan analysis under the following measurement conditions.

(Measurement Conditions)

Equipment used: "ESCA-3400" (manufactured by Kratos Analytical Ltd.)

[1] Spectral collection conditions

Incident X-rays: MgK$\alpha$ (monochromated X-rays; hv = 1253.6 eV)

X-ray power: 150 W (10 kV·15 mA)

X-ray scan area (region measured): Approximately 6 mm$\phi$

Photoelectron acceptance angle: 90 degrees

[2] Ion sputtering conditions

Ion species: Ar$^+$

Acceleration voltage: 0.2 (kV)

Emission current: 20 (mA)

Etching range: 10 mm$\phi$

Ion sputtering duration: 30 seconds + 30 seconds + 60 seconds (a total of 120 seconds), followed by spectral collection

The gas barrier composition may contain water, preferably in a proportion of 0.1 moles or more, more preferably 0.5 moles or more, further preferably 0.8 moles or more, and preferably 100 moles or less, more preferably 60 moles or less, further preferably 2 moles or less, per mole of the metal alkoxide. By setting the amount of water equal to or greater than the lower limits, the oxygen barrier properties and water vapor barrier properties of the laminate, for example, can be improved. By setting the amount of water equal to or smaller than the upper limits, the hydrolysis reaction, for example, can be performed rapidly.

The gas barrier composition may contain an organic solvent. Examples of organic solvents include methyl alcohol, ethyl alcohol, n-propyl alcohol, isopropyl alcohol, and n-butyl alcohol.

The sol-gel catalyst is preferably an acid or an amine compound.

Examples of acids include mineral acids, such as sulfuric acid, hydrochloric acid, and nitric acid; and organic acids, such as acetic acid and tartaric acid. The amount of acid used is preferably 0.001 moles or more and 0.05 moles or less per mole as the total number of moles of the metal alkoxide and the alkoxide content (e.g., the silicate moiety) of the silane coupling agent. By setting the amount of acid used equal to or greater than the lower limit, the catalytic effect can be improved. By setting the amount of acid used equal to or smaller than the upper limit, a uniform thickness of the formed gas barrier coating film can be achieved.

For amine compounds, tertiary amines that are substantially insoluble in water and soluble in organic solvents are suitable for use. Examples include N,N-dimethylbenzylamine, tripropylamine, tributylamine, and tripentylamine. Of these, N,N-dimethylbenzylamine is particularly preferred.

The amount of amine compound used is preferably 0.01 parts by mass or more, more preferably 0.03 parts by mass or more, and preferably 1.0 part by mass or less, more preferably 0.3 parts by mass or less, relative to a total of 100 parts by mass of the metal alkoxide and the silane coupling agent. By setting the amount of amine compound used equal to or greater than the lower limits, its catalytic effect can be improved. By setting the amount of amine compound used equal to or smaller than the upper limits, a uniform thickness of the formed gas barrier coating film can be achieved.

Examples of methods for applying the gas barrier composition include application means such as gravure roll coating and other types of roll coating, spray coating, spin coating, dipping, a brush, bar coating, and an applicator.

In the following, an embodiment of a method for forming a gas barrier coating film will be described.

By mixing materials such as a metal alkoxide, a water-soluble polymer, a sol-gel catalyst, water, an organic solvent, and optionally a silane coupling agent, a gas barrier composition is prepared. Within the composition, a polycondensation reaction proceeds gradually. Using conventional methods, the composition is applied onto the inorganic oxide layer and dried. Through this drying, the polycondensation of the metal alkoxide and the water-soluble polymer (and the silane coupling agent, when the composition contains a silane coupling agent) further proceeds, resulting in the formation of a layer of a composite polymer. Multiple composite polymer layers may be stacked by repeating this operation. For example, the applied composition is heated for 1 second or longer and 10 minutes or shorter, preferably at a temperature of 20°C or above, more preferably 50°C or above, further preferably 70°C or above, and preferably at a temperature of 250°C or below, more preferably 220°C or below, further preferably 150°C or below, still more preferably 120°C or below, particularly preferably 100°C or below. Through this, a gas barrier coating film can be formed.

The thickness of the gas barrier coating film is preferably 0.01 $\mu$m or more, more preferably 0.1 $\mu$m or more, and

preferably is 100 $\mu$m or less, more preferably 10 $\mu$m or less, further preferably 2 $\mu$m or less, still more preferably 1 $\mu$m or less, particularly preferably 0.5 $\mu$m or less. For example, the thickness is 0.01 $\mu$m or more and 100 $\mu$m or less. When this is the case, gas barrier properties, for example, can be improved, the development of cracks in the inorganic oxide layer can be reduced, and, furthermore, the recyclability of the packaging container can be improved.

<Printed Layer>

The laminate according to the present disclosure may include a printed layer on the surface of the base material, such as the first base material or second base material, and between any layers. The image formed in the printed layer is not particularly limited; characters, patterns, symbols, and combinations thereof, for example, are presented. The formation of the printed layer can be performed using a biomass-derived ink. Through this, environmental impact can be further reduced.

Examples of methods for forming the printed layer include printing methods known in the related art, such as gravure printing, offset printing, and flexography. Of these, flexography is particularly preferred from the viewpoint of reduced environmental impact.

The thickness of the printed layer is, for example, 0.5 $\mu$m or more and 3 $\mu$m or less.

<Adhesive Agent Layer>

The laminate according to the present disclosure includes, in an embodiment, an adhesive agent layer between the base material and the sealant layer. The laminate according to the present disclosure includes, in an embodiment, a first adhesive agent layer between the first base material and the second base material. The laminate according to the present disclosure includes, in an embodiment, a second adhesive agent layer between the second base material and the sealant layer. Such laminates are superior in, for example, lamination strength at the base material/sealant layer interface, the first base material/second base material interface, and the second base material/sealant layer interface.

(Adhesive)

The adhesive agent layer, the first adhesive agent layer, and the second adhesive agent layer are each composed of an adhesive. The adhesive that forms the first adhesive agent layer and the adhesive that forms the second adhesive agent layer may be the same or may be different. The adhesive may be any of a one-component adhesive, a two-component adhesive, or a non-curing adhesive. A two-component adhesive is preferred because it facilitates the adjustment of the elastic modulus of the adhesive agent layer to the required range.

An example of a method for obtaining the laminate using an adhesive is the method of applying the adhesive to a subject, placing another subject over the formed adhesive agent layer, and allowing the curing of the adhesive agent layer sandwiched between the two subjects to proceed in that state. Examples of subjects include the first base material, the second base material, and the sealant film. The step of allowing the curing of the adhesive agent layer to proceed is hereinafter also referred to as "the aging step."

The conditions for the aging of the adhesive will be described below. The aging temperature is preferably 25°C or above, more preferably 30°C or above, further preferably 35°C or above, and preferably is 80°C or below, more preferably 70°C or below, further preferably 60°C or below. The aging duration is preferably 5 hours or more, more preferably 10 hours or more, further preferably 20 hours or more, and preferably is 150 hours or less, more preferably 135 hours or less, further preferably 120 hours or less. Increasing the aging temperature tends to result in a higher elastic modulus of the adhesive agent layer. Extending the aging duration tends to result in a higher elastic modulus of the adhesive agent layer.

Examples of adhesives include polyurethane adhesives, polyester adhesives, polyether adhesives, rubber adhesives, vinyl adhesives, olefin adhesives, silicone adhesives, epoxy adhesives, and phenolic adhesives. Of these, polyurethane adhesives, polyester adhesives, and polyether adhesives are particularly preferred because they facilitate the adjustment of the elastic modulus to the range specified above. Polyurethane adhesives and polyester adhesives are more preferred, polyurethane adhesives are even more preferred, and two-component polyurethane adhesives are particularly preferred.

The adhesive may be a solvent-based adhesive or may be a solventless adhesive.

Solvent-based adhesive refers to an adhesive used in the method of applying the adhesive to a subject, then evaporating the solvent in the adhesive by heating, for example in an oven, and joining the workpiece to another subject thereafter. In the case of a two-component adhesive, any one of the base ingredient or the curing agent or both contain the solvent. Examples of the solvent include organic solvents, specifically hydrocarbon solvents, such as toluene, xylene, n-hexane, and methylcyclohexane; ester solvents, such as ethyl acetate, n-propyl acetate, n-butyl acetate, and isobutyl acetate; alcohol solvents, such as methanol, ethanol, isopropyl alcohol, n-butyl alcohol, and isobutyl alcohol; and ketone solvents, such as acetone, methyl ethyl ketone, methyl isobutyl ketone, and cyclohexanone.

Solventless adhesive refers to an adhesive used in the method of applying the adhesive to a subject and then joining the workpiece to another subject, not necessarily via a step of evaporating a solvent by heating, for example, in an oven. In the case of a two-component adhesive, both the base ingredient and the curing agent are substantially free of solvents. "Being substantially free of solvents" encompasses the case in which a trace amount of the solvent used as a reaction medium during the production of the constituents of the adhesive, or the constituents of the base ingredient and/or the curing agent in the case of a two-component adhesive, remains in the adhesive, or in the base ingredient and/or the curing agent in the case of a two-component adhesive, without being completely removed.

A two-component polyurethane adhesive includes a base ingredient and a curing agent. A two-component polyurethane adhesive may be solvent-based or may be solventless. In the following, a two-component polyurethane adhesive will be described.

A polyurethane adhesive includes, for example, a base ingredient containing a polyol compound and a curing agent containing a polyisocyanate compound. Examples of cured materials (reaction products) formed by mixing such a base ingredient and a curing agent include polyurethanes, specifically polyester polyurethanes, polyether polyurethanes, polycarbonate polyurethanes, and acrylic polyurethanes.

A polyol compound has two or more hydroxy groups in one molecule. Examples of polyol compounds include polyester polyurethane polyols, polyester polyols, polyether polyols, polycarbonate polyols, and acrylic polyols. Of these, polyester polyurethane polyols and polyester polyols are particularly preferred because they facilitate the formation of an adhesive agent layer having an elastic modulus falling within the range specified above. In the case of a solvent-based adhesive, polyester polyurethane polyols are more preferred, and in the case of a solventless adhesive, polyester polyols are more preferred.

A polyester polyurethane polyol is a compound having two or more hydroxy groups, two or more ester linkages, and two or more urethane linkages in one molecule and has, for example, a polyester polyurethane structure as its backbone. A polyester polyol is a compound having two or more hydroxy groups and two or more ester linkages in one molecule and has, for example, a polyester structure as its backbone. A polyether polyol is a compound having two or more hydroxy groups and two or more ether linkages in one molecule. A polycarbonate polyol is a compound having two or more hydroxy groups and two or more carbonate linkages in one molecule.

The weight-average molecular weight (Mw) of a polymeric constituent contained in the base ingredient of a two-component and solvent-based adhesive (e.g., a polyol compound) is preferably 11,000 or more, more preferably 13,000 or more, further preferably 15,000 or more, still more preferably 18,000 or more, particularly preferably 20,000 or more, and preferably is 100,000 or less, more preferably 50,000 or less, further preferably 40,000 or less, for coating suitability reasons. The smaller the Mw, the higher the elastic modulus of the adhesive agent layer tends to be. The greater the Mw, the lower the elastic modulus of the adhesive agent layer tends to be.

The polydispersity (Mw/Mn) of the polymeric constituent contained in the base ingredient (e.g., a polyol compound) is preferably 5.0 or less, more preferably 4.5 or less, further preferably 4.0 or less, and preferably is 1.5 or greater, more preferably 2.0 or greater, further preferably 2.5 or greater. In this context, Mn is the number-average molecular weight of the polymeric constituent contained in the base ingredient (e.g., a polyol compound). Each average molecular weight is measured by gel permeation chromatography (GPC) according to JIS K7252-1: 2016 and is a polystyrene-equivalent value.

The weight-average molecular weight (Mw) of the polymeric constituent contained in the base ingredient of a two-component and solventless adhesive (e.g., a polyol compound) is preferably 800 or more, more preferably 1,200 or more, further preferably 2,000 or more, and preferably is 10,000 or less, more preferably 8,000 or less, further preferably 6,000 or less, for coating suitability reasons. The smaller the Mw, the higher the elastic modulus of the adhesive agent layer tends to be. The greater the Mw, the lower the elastic modulus of the adhesive agent layer tends to be.

The polydispersity (Mw/Mn) of the polymeric constituent contained in the base ingredient (e.g., a polyol compound) is preferably 2.8 or less, more preferably 2.7 or less, further preferably 2.6 or less, particularly preferably 2.5 or less, and preferably is 1.2 or greater, more preferably 1.5 or greater, further preferably 2.0 or greater. In this context, Mn is the number-average molecular weight of the polymeric constituent contained in the base ingredient (e.g., a polyol compound).

A polyisocyanate compound has two or more isocyanate groups in one molecule. Examples of polyisocyanate compounds include aromatic isocyanates and aliphatic isocyanates. The polyisocyanate compound may be a blocked isocyanate compound obtained through an addition reaction by an appropriate known and commonly used method using a known isocyanate-blocking agent.

Examples of polyisocyanate compounds include aliphatic isocyanate compounds, such as tetramethylene diisocyanate, hexamethylene diisocyanate (HDI), norbornene diisocyanate, and isophorone diisocyanate (IPDI); aromatic isocyanate compounds, such as diphenylmethane diisocyanate, hydrogenated diphenylmethane diisocyanate, xylylene diisocyanate (XDI), hydrogenated xylylene diisocyanate, tolylene diisocyanate (TDI), naphthalene diisocyanate, and $\alpha,\alpha,\alpha',\alpha'$-tetramethyl-m-xylylene diisocyanate, dimers and trimers (e.g., isocyanurates) derived from such compounds; and adducts, biurets, and allophanates obtained by allowing such compounds to react with a small-molecule active hydrogen compound or its alkylene oxide adduct or with a polymeric active hydrogen compound.

Examples of small-molecule active hydrogen compounds include ethylene glycol, propylene glycol, diethylene glycol, dipropylene glycol, 1,4-butanediol, neopentyl glycol, 1,6-hexamethylene glycol, 1,8-octamethylene glycol, 1,4-cyclohexane dimethanol, meta-xylylene alcohol, 1,3-bishydroxyethylbenzene, 1,4-bishydroxyethylbenzene, trimethylolethane, trimethylolpropane, glycerol, pentaerythritol, erythritol, sorbitol, ethylenediamine, monoethanolamine, diethanolamine, triethanolamine, and meta-xylylenediamine, with trimethylolpropane being preferred. Examples of polymeric active hydrogen compounds include polyesters, polyether polyols, and polyamides.

The base ingredient containing a polyol compound and the curing agent containing a polyisocyanate compound are preferably used in relative amounts such that the molar ratio between all isocyanate groups that the polyisocyanate compound has and all hydroxy groups that the polyol compound has (NCO/OH) is as follows. That is, the molar ratio (NCO/OH) is preferably 0.5 or greater, more preferably 1.0 or greater, further preferably 1.5 or greater, and preferably is 8.0 or less, more preferably 6.0, further preferably 5.0 or less. In the case of a solventless adhesive, it is even more preferred that the ratio be 4.0 or less, particularly preferably 3.0 or less. The greater the molar ratio (NCO/OH), the higher the elastic modulus of the adhesive agent layer tends to be. The smaller the molar ratio (NCO/OH), the lower the elastic modulus of the adhesive agent layer tends to be.

<Sealant Layer>

The laminate according to the present disclosure includes, as the sealant layer, a sealant film for laminates according to the present disclosure as described above. Through this, the impact resistance after retort treatment of a laminate in which the sealant film for laminates according to the present disclosure is used as its sealant layer can be improved.

When the sealant layer (sealant film for laminates) contains random polypropylene and block polypropylene, monomaterialization of the packaging container, for example, can be sought. Random polypropylene and block polypropylene fall into the category of polypropylene in the calculation of the percentage monomaterialization. As a result of this, there is no need to separate the base material (the first base material and the second base material) and the sealant layer after collecting a used packaging container, whereby the recycling suitability of the packaging container can be improved.

The sealant layer may contain additives as mentioned above.

The sealant layer may have undergone surface treatment as mentioned above.

<Bonding Layer>

The laminate includes, in an embodiment, a bonding layer between the base material (the first base material) and the sealant layer. The laminate includes, in an embodiment, a first bonding layer between the first base material and the second base material. The laminate includes, in an embodiment, a second bonding layer between the second base material and the sealant layer. Through these, adhesion between the base material and the sealant layer, adhesion between the first base material and the second base material, and adhesion between the second base material and the sealant layer can be improved.

The bonding layer is composed of an adhesive. The adhesive may be any of a one-component adhesive, a two-component adhesive, or a non-curing adhesive. The adhesive may be a solventless adhesive or may be a solvent-based adhesive. The laminate according to the present disclosure includes, in an embodiment, at least the three elements of a polypropylene resin base material, a barrier base material, and a sealant layer. By virtue of this, the laminate can be manufactured without direct application of an adhesive onto the vapor deposition film when the laminate is manufactured using an adhesive. The deterioration of the vapor deposition film, therefore, can be limited.

Examples of solventless adhesives, or solventless lamination adhesives, include polyether adhesives, polyester adhesives, silicone adhesives, epoxy adhesives, and polyurethane adhesives. Of these, polyurethane adhesives are particularly preferred, with two-component polyurethane adhesives being more preferred.

A solventless adhesive is, in an embodiment, a two-component adhesive including a base ingredient and a curing agent. The weight-average molecular weight (Mw) of a polymeric constituent contained in the base ingredient is preferably 800 or greater and 10,000 or less, more preferably 1,200 or greater and 4,000 or less, for coating suitability reasons. The polydispersity (Mw/Mn) of the polymeric constituent contained in the base ingredient is preferably 2.8 or less, more preferably 1.2 or greater and 2.7 or less, further preferably 1.5 or greater and 2.6 or less, particularly preferably 2.0 or greater and 2.5 or less. In this context, Mn is the number-average molecular weight of the polymeric constituent contained in the base ingredient. Each average molecular weight is measured by gel permeation chromatography (GPC) according to JIS K7252-1 (2008) and is a polystyrene-equivalent value.

Examples of solvent-based adhesives include rubber adhesives, vinyl adhesives, olefin adhesives, silicone adhesives, epoxy adhesives, phenolic adhesives, and polyurethane adhesives. Of these, polyurethane adhesives are particularly preferred, with two-component polyurethane adhesives being more preferred.

In an embodiment, by forming the bonding layer using a solventless adhesive, the residual solvent content, specifically the residual organic solvent content, of the laminate, for example, can be further reduced. The laminate according to the present disclosure includes a polypropylene resin layer. When the laminate according to the present disclosure is produced using a solvent-based adhesive, therefore, the temperature during drying of the adhesive needs to be set lower compared with the case of a polyester-based laminate to prevent deterioration and thermal shrinkage of the laminate. In that case, the solvent in the adhesive may remain in the laminate without being sufficiently evaporated and removed, and an odor from the residual solvent may be left. By using a solventless adhesive, the residual solvent content can be further reduced.

Examples of such organic solvents include hydrocarbon solvents, such as toluene, xylene, n-hexane, and methylcyclohexane; ester solvents, such as ethyl acetate, n-propyl acetate, n-butyl acetate, and isobutyl acetate; alcohol solvents, such as methanol, ethanol, isopropyl alcohol, n-butyl alcohol, and isobutyl alcohol; and ketone solvents, such as acetone, methyl ethyl ketone, methyl isobutyl ketone, and cyclohexanone.

In an embodiment, by using a solventless adhesive, a thinner bonding layer, for example, can be formed compared with when a solvent-based adhesive is used. Through this, the percentage of polypropylene in the entire laminate can be further improved. Such a laminate is suitable for producing a monomaterialized packaging container.

The thickness of the bonding layer is, for example, 0.1 μm or more and 10 μm or less, preferably 0.2 μm or more and 8 μm or less, more preferably 0.5 μm or more and 6 μm or less. The thickness of the bonding layer may be 2 μm or less.

The method for manufacturing the laminate according to the present disclosure is not particularly limited; the laminate can be manufactured using methods known in the related art, such as dry lamination, hot-melt extrusion lamination, and sandwich lamination. For example, the laminate according to the present disclosure may be, in an embodiment, manufactured by joining the base material and the sealant film, or, alternatively, the first base material, the second base material, and the sealant film, by solventless lamination, in which a solventless adhesive is used, or may be manufactured by joining them by dry lamination, in which a solvent-based adhesive is used.

In the following, a two-component polyurethane adhesive will be described. This polyurethane adhesive is preferably, for example, an adhesive that includes a base ingredient containing a polyol compound, such as a polyester polyol, and a curing agent containing an isocyanate compound.

Examples of polyol compounds include polyester polyols, polyether polyols, polycarbonate polyols, and (meth) acrylic polyols. Of these, polyester polyols are particularly preferred.

A polyester polyol has two or more hydroxyl groups in one molecule. A polyester polyol has, for example, a polyester structure or a polyester-polyurethane structure as its backbone. A polyester polyol is obtained through, for example, a dehydrative condensation reaction between a polyhydric alcohol component and a polycarboxylic acid component or through transesterification or a ring-opening reaction.

Examples of polyhydric alcohol components include diols, such as ethylene glycol, propylene glycol, diethylene glycol, dipropylene glycol, 1,4-butanediol, 1,5-pentanediol, 3-methyl-1,5-pentanediol, 1,6-hexanediol, neopentyl glycol, and cyclohexane dimethanol; and trifunctional or higher-functionality polyols, such as glycerol, triethylolpropane, trimethylolpropane, pentaerythritol, and sorbitol.

Examples of polycarboxylic acid components include aliphatic polycarboxylic acids, alicyclic polycarboxylic acids, and aromatic polycarboxylic acids and their ester derivatives and acid anhydrides. Examples of aliphatic polycarboxylic acids include aliphatic dicarboxylic acids, such as succinic acid, adipic acid, azelaic acid, sebacic acid, dodecanedicarboxylic acid, maleic acid, fumaric acid, and dimer acid. Examples of alicyclic polycarboxylic acids include 1,3-cyclopentanedicarboxylic acid and 1,4-cyclohexanedicarboxylic acid. Examples of aromatic polycarboxylic acids include phthalic acid, isophthalic acid, terephthalic acid, trimellitic acid, pyromellitic acid, naphthalenedicarboxylic acid, naphthalic acid, biphenyldicarboxylic acid, and 1,2-bis(phenoxy)ethane-p,p'-dicarboxylic acid.

A polyester polyol can optionally be extended in advance using a polyisocyanate. Examples of polyisocyanates include diisocyanates, such as 1,6-hexamethylene diisocyanate, isophorone diisocyanate, norbornene diisocyanate, m-xylylene diisocyanate, $\alpha,\alpha,\alpha'\alpha'$-tetramethyl-m-xylylene diisocyanate, tolylene diisocyanate, naphthalene diisocyanate, and diphenylmethane diisocyanate; and biurets, isocyanurates, or trimethylolpropane adducts of diisocyanates.

The weight-average molecular weight (Mw) of the polyol compound, such as a polyester polyol, is preferably 800 or greater and 10,000 or less, more preferably 1,200 or greater and 4,000 or less, for coating suitability reasons. The polydispersity (Mw/Mn) of the polyol compound, such as a polyester polyol, is preferably 2.8 or less, more preferably 1.2 or greater and 2.7 or less, further preferably 1.5 or greater and 2.6 or less, particularly preferably 2.0 or greater and 2.5 or less. In this context, Mn is the number-average molecular weight of the polyol compound. Each average molecular weight is measured by gel permeation chromatography (GPC) according to JIS K7252-1 (2008) and is a polystyrene-equivalent value.

An isocyanate compound has two or more isocyanate groups in one molecule.

Examples of isocyanate compounds include aromatic isocyanates and aliphatic isocyanates. The isocyanate compound may be a blocked isocyanate obtained through an addition reaction by an appropriate known and commonly used method using a known isocyanate-blocking agent.

Examples of isocyanate compounds include diisocyanates, such as tetramethylene diisocyanate, hexamethylene diisocyanate, norbornene diisocyanate, isophorone diisocyanate, diphenylmethane diisocyanate, hydrogenated diphenylmethane diisocyanate, m-xylylene diisocyanate, hydrogenated xylylene diisocyanate, tolylene diisocyanate, naphthalene diisocyanate, and $\alpha,\alpha,\alpha'\alpha'$-tetramethyl-m-xylylene diisocyanate; trimers of such diisocyanates; and adducts, biurets, and allophanates obtained by allowing such diisocyanate compounds to react with a small-molecule active hydrogen compound or its alkylene oxide adduct or with a polymeric active hydrogen compound.

Examples of small-molecule active hydrogen compounds include ethylene glycol, propylene glycol, diethylene glycol, dipropylene glycol, 1,4-butanediol, neopentyl glycol, 1,6-hexamethylene glycol, 1,8-octamethylene glycol, 1,4-cyclohexane dimethanol, meta-xylylene alcohol, 1,3-bishydroxyethylbenzene, 1,4-bishydroxyethylbenzene, trimethylolethane, trimethylolpropane, glycerol, pentaerythritol, erythritol, sorbitol, ethylenediamine, monoethanolamine, diethanolamine, triethanolamine, and meta-xylylenediamine. Examples of polymeric active hydrogen compounds include polyesters, polyether polyols, and polyamides.

[Packaging Container]

The laminate according to the present disclosure is suitable for use in packaging material applications.

A packaging material is used to produce a packaging container. A packaging material includes a laminate according to the present disclosure. By using at least a packaging material including a laminate according to the present disclosure, a packaging container can be produced.

A packaging container according to the present disclosure includes a laminate according to the present disclosure (hereinafter also referred to simply as "laminate"). Examples of packaging containers include a packaging container, a tube container, and a lidded container. A lidded container includes a container body having a holding portion and a lid joined (heat-sealed) to the container body so as to seal the holding portion.

The packaging container according to the present disclosure is, in an embodiment, suitable as a heat sterilization pouch or a microwaveable packaging container because it maintains gas barrier properties and deforms only to a small extent even when exposed to high-temperature treatment. In this context, heat sterilization pouch refers to any of a pouch that can be subjected to heat sterilization treatment with contents contained therein, or a pouch that has undergone heat sterilization treatment with contents contained therein. Microwaveable packaging container, furthermore, refers to a packaging container that can be heated using a microwave.

Examples of heat sterilization pouches include a pouch that has undergone retort treatment (hereinafter also referred to as "retort pouch"), a pouch that has undergone boiling treatment (hereinafter also referred to as "boiled pouch"), and a pouch that has undergone pasteurization treatment (hereinafter "pasteurized pouch." A retort pouch is a packaging container obtained by filling contents, such as a food or beverage, into a packaging container, hermetically sealing the container, and then subjecting the container to heat sterilization treatment with water or steam at a temperature exceeding 100°C under applied pressure (pressure heat sterilization treatment). A boiled pouch or a pasteurized pouch is a packaging container obtained by filling contents, such as a food or beverage, into a packaging container, hermetically sealing the container, and then subjecting the container to boiling treatment at a temperature of 100°C or below.

The packaging container according to the present disclosure is, in an embodiment, a retort pouch. Although conditions for the pressure heat sterilization treatment can vary, any pouch that has undergone typical pressure heat sterilization treatment is encompassed within the retort pouch. Among types of heat sterilization treatment, one in which the treatment temperature is 105°C or above and 115°C or below may be referred to as semi-retort treatment, one in which the treatment temperature is above 115°C and below 130°C may be referred to as retort treatment, and one in which the treatment temperature is above 135°C and 140°C or below may be referred to as high-retort treatment.

The duration of retort treatment is, for example, 5 minutes or longer and 60 minutes or shorter, preferably 15 minutes or longer and 40 minutes or shorter.

The oxygen transmission rate (unit: cc/m$^2\cdot$day·atm) of a retort pouch according to the present disclosure is measured in an environment at a temperature of 23°C and a relative humidity of 90% RH according to JIS K7126-2: 2006.

The oxygen transmission rate of a retort pouch, furthermore, is preferably 3.0 or less, more preferably 2.0 or less, further preferably 1.5 or less, particularly preferably 1.0 or less. When the oxygen transmission rate of a retort pouch after pressure heat sterilization treatment is 3.0 or less, the pouch is suitable for use as food packaging for long-term storage.

For the lower limit to the oxygen transmission rate of the retort pouch, the lower the value, the better. For example, however, the lower limit may be 0.1.

Examples of methods for heat sealing include bar sealing, revolving roller sealing, belt sealing, impulse sealing, radiofrequency sealing, and ultrasonic sealing.

Examples of packaging containers include packaging containers in various forms, such as the stand-up pouch type, the side-seal type, the two-side-seal type, the three-side-seal type, the four-side-seal type, the center-seal type, the pillow-seal type, the pleated-seal type, the flat-bottom-seal type, the square-bottom-seal type, and the gusset type.

The packaging container may include an easy-open portion. Examples of easy-open portions include a notch portion, which serves as a starting point for tearing the packaging container, and a half-cut line, formed using laser machining, a cutting knife, or other methods as a guideline during tearing of the packaging container.

The packaging container may include a steam vent mechanism. The steam vent mechanism is configured such that when the steam pressure inside the packaging container reaches a predetermined value or higher, the steam vent mechanism establishes connection between the inside and the outside of the packaging container to release the steam, while limiting the escape of steam at points other than the mechanism.

The steam vent mechanism includes, for example, a steam vent seal portion extending from a side seal portion toward the inside of the packaging container, and an unsealed portion isolated from the content-holding portion by the steam vent seal portion. The unsealed portion leads to the outside of the packaging container. After the contents are introduced and the opening is heat-sealed, the packaging container is heated, for example using a microwave. As a result of this, the internal pressure increases, and the steam vent seal portion detaches. The steam travels through the detached area of the steam vent seal portion and the unsealed portion and escapes to the outside of the packaging container.

In an embodiment, the packaging container can be produced by folding a laminate according to the present disclosure in two such that the base material is positioned outside and the sealant layer inside, aligning the two halves, and heat-sealing, for example, their edges. In another embodiment, the packaging container can be produced by aligning multiple laminates according to the present disclosure such that their sealant layers face each other, and heat-sealing, for example, their edges. The entire packaging container may be composed of the laminate(s), or part of the packaging container may be composed of the laminate(s).

In an embodiment, a laminate according to the present disclosure is used as the lid of a lidded container. A lidded container includes a container body having a holding portion and a lid joined (heat-sealed) to the container body so as to seal the holding portion. In this configuration, the lid, or the sealant layer of the laminate, and the container body have been heat-sealed together. Examples of shapes of the container body include a cup shape and a bottomed cylindrical shape. The container body is, for example, made of polystyrene, made of polypropylene, made of polyethylene, or made of paper.

Examples of contents that can be held in the packaging container include liquids, solids, powders, and gels. The contents may be a food or beverage or may be a non-food and non-beverage item, such as a chemical product, a cosmetic product, or a pharmaceutical product. By filling the contents into the packaging container and then heat-sealing the opening of the packaging container, the packaging container can be hermetically sealed.

The contents, furthermore, may be heat-sterilized food (food that has been heat-sterilized, such as retort food, boiled food, or a pasteurized beverage). The packaging container according to the present disclosure may be a pouch for holding heat-sterilized food.

As specific examples of packaging containers, a sachet and a stand-up pouch will be described below.

A sachet is a small packaging container and is used to hold contents weighing, for example, 1 g or more and 200 g or less. Examples of contents that can be held in a sachet include sauce, soy sauce, dressing, ketchup, syrup, cooking liquor, and other liquid or viscous seasonings and ingredients; liquid soup, powdered soup, and fruit or vegetable juices; spices; liquid beverages, jelly drinks, instant foods, and other foods and beverages.

A stand-up pouch is used to hold contents weighing, for example, 50 g or more and 2000 g or less. Examples of contents that can be held in a stand-up pouch include shampoo, hair rinse, hair conditioner, hand soap, body soap, air freshener, chemical deodorizers, physical deodorizers, mothballs, and detergents; dressing, cooking oil, mayonnaise, and other liquid or viscous seasonings and ingredients; liquid beverages, jelly drinks, instant foods, and other foods and beverages; and creams.

In Fig. 21, a packaging container 50 obtained by joining two laminates together is illustrated. The hatched areas indicate heat-sealed portions. The packaging container 50 may include an easy-open portion 51. Examples of easy-open portions 51 include a notch portion 52, which serves as a starting point for tearing, and a half-cut line 53, formed using laser machining, a cutting knife, or other methods as a guideline during tearing.

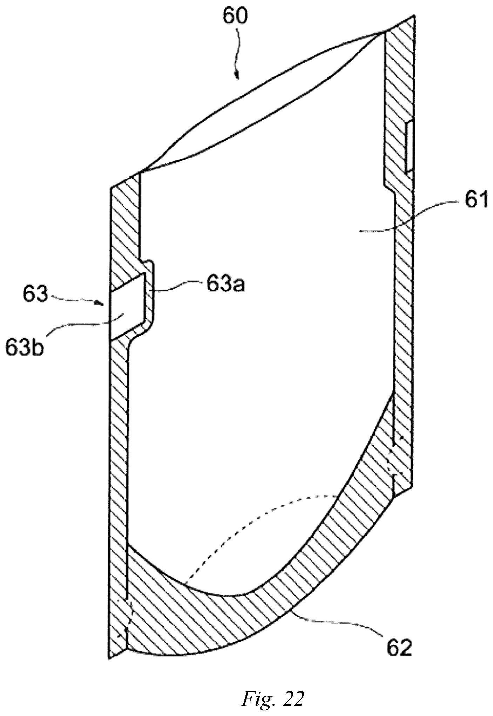

In Fig. 22, an example of a structure of a stand-up pouch is briefly illustrated. The hatched areas indicate heat-sealed portions. The stand-up pouch 60 includes, in an embodiment, a trunk (side sheet) 61 and a bottom (bottom sheet) 62. The side sheet 61 and the bottom sheet 62 may be portions of the same component or may be different components. The bottom sheet 62 supports the shape of the side sheet 61, thereby imparting self-standability to the pouch. As a result, the pouch can be formed as a stand-up type. Within the region enclosed by the side sheet 61 and the bottom sheet 62, a holding space, which is for holding contents, is created.

The stand-up pouch 60 may include a steam vent mechanism 63. The steam vent mechanism 63 includes a steam vent seal portion 63a extending from a side seal portion toward the inside of the packaging container, and an unsealed portion 63b isolated from the content-holding portion by the steam vent seal portion 63a. The unsealed portion 63b leads to the outside of the packaging container.

In a stand-up pouch, the trunk alone may be formed of a laminate according to the present disclosure, the bottom alone may be formed of a laminate according to the present disclosure, or both the trunk and the bottom may be formed of a laminate according to the present disclosure.

In an embodiment, the side sheet can be formed by shaping a laminate according to the present disclosure into a bag such that its sealant layer becomes the innermost layer. In an embodiment, the side sheet can be formed by preparing two laminates according to the present disclosure, aligning them such that their sealant layers face each other, and shaping the laminates into a bag by heat-sealing both side edges.

In another embodiment, the side sheet can be formed by preparing two laminates according to the present disclosure, aligning them such that their sealant layers face each other, folding two laminates into a V-shape such that the sealant layer is positioned outside, inserting the two folded laminates between the aligned laminates at both side edges, one on each side, and heat-sealing the laminates. With such a production method, a stand-up pouch having a trunk with side gussets is obtained.

In an embodiment, the bottom sheet can be formed by inserting a laminate according to the present disclosure between lower portions of a bag-shaped side sheet and heat-sealing them. More specifically, the bottom sheet can be formed by folding a laminate into a V-shape such that its sealant layer is positioned outside, inserting the folded laminate between lower portions of a bag-shaped side sheet, and heat-sealing them.

In an embodiment, the bottom is formed by preparing two laminates as described above, aligning them such that their sealant layers face each other, then folding another laminate as described above into a V-shape such that its sealant layer is positioned outside, placing it between lower portions of the laminates facing each other, and heat-sealing the laminates. Subsequently, the trunk is formed by heat-sealing the two edges adjacent to the bottom. In such a manner, a stand-up pouch according to an embodiment can be formed.

[Mechanism of Operation]

When a laminate in which the percentage of a single polypropylene material is 80% by mass or more (hereinafter referred to as a propylene-based laminate) is used as a packaging material, the propylene-based laminate is subjected to heat sterilization treatment, such as retort treatment or boiling treatment. The propylene-based laminate, therefore, is required to have resistance to fall impact (impact resistance) sufficient to withstand impact from a fall of the pouch after the retort or other heat treatment, and hand tearability (openability) that allows the pouch to be easily torn by hand after the retort treatment.

In such circumstances, the inventors found that by reducing the percentage of polypropylene by incorporating polyethylene and ethylene-propylene rubber while maintaining the percentage of polypropylene in the total amount of the sealant film at 40% by mass or more, the elastic modulus of the sealant film can be reduced, whereby resistance to fall impact can be improved. That is, using, as the sealant layer, a sealant film for laminates that contains polypropylene constituting 40% by mass or more relative to the total amount of the sealant film, polyethylene, and ethylene-propylene rubber and that has a composite modulus of elasticity as measured by nanoindentation of 500 MPa or more and 900 MPa or less contributes to improving the resistance to fall impact (impact resistance) and hand tearability (openability) of the laminate.

The present disclosure relates to, for example, [1] to [11] below.

[1] A sealant film for a laminate, the sealant film being for use in a laminate in which a percentage of polypropylene relative to a total amount of resin materials is 80% by mass or more,

the sealant film containing polypropylene, polyethylene, and ethylene-propylene rubber, wherein:

a percentage of the polypropylene relative to a total amount of the sealant film is 40% by mass or more; and

the sealant film has a composite modulus of elasticity as measured by nanoindentation of 500 MPa or more and 900 MPa or less.

[2] The sealant film for a laminate according to [1], wherein a percentage of the polyethylene relative to the total amount of the sealant film is 25% by mass or more and 40% by mass or less.

[3] The sealant film for a laminate according to [1] or [2], wherein a percentage of the ethylene-propylene rubber relative to the total amount of the sealant film is 5% by mass or more and 15% by mass or less.

[5] The sealant film for a laminate according to any of [1] to [3], wherein the sealant film contains a propylene-ethylene elastomer or an ethylene-a olefin elastomer.

[5] The sealant film for a laminate according to any of [1] to [4], wherein the sealant film includes at least a first layer that, when the sealant film is used in the laminate, is positioned at one of two surfaces of the laminate and a second layer in contact with the first layer.

[6] The sealant film for a laminate according to [5], the sealant film further including a third layer in contact with the second layer.

[7] The sealant film for a laminate according to any of [1] to [6], wherein a thickness of the sealant film is 30 μm or more and 200 μm or less.

[8] A laminate for use in a packaging material,
the laminate including one or more base materials and a sealant layer, wherein:

the sealant layer is formed of the sealant film for a laminate according to any one of [1] to [7]; and

a percentage of polypropylene relative to a total amount of resin materials is 80% by mass or more.

[9] A packaging container including the laminate according to [8].

[10] The packaging container according to [9], which is a pouch for holding heat-sterilized food.

[11] A heat sterilization pouch including:

the packaging container according to [10]; and

heat-sterilized food held in the packaging container.

The present disclosure relates to, for example, [1A] to [11A] below as embodiments thereof.

[1A] A sealant film for a laminate, the sealant film being for use in a laminate in which a percentage of polypropylene relative to a total amount of resin materials is 80% by mass or more,
the sealant film containing polypropylene constituting 40% by mass or more of a total amount of the sealant film, wherein:
the sealant film has a composite modulus of elasticity as measured by nanoindentation of 500 MPa or more and 900 MPa or less.

[2A] The sealant film for a laminate according to [1A], wherein the sealant film contains polyethylene.

[3A] The sealant film for a laminate according to [1A] or [2A], wherein the sealant film contains an ethylene-propylene elastomer.

[4A] The sealant film for a laminate according to any of [1A] to [3A], wherein the sealant film contains a propylene-ethylene elastomer or an ethylene-a olefin elastomer.

[5A] The sealant film for a laminate according to any of [1A] to [4A], wherein the sealant film includes at least a first layer that, when the sealant film is used in the laminate, is positioned at one of two surfaces of the laminate and a second layer in contact with the first layer.

[6A] The sealant film for a laminate according to [5A], the sealant film further including a third layer in contact with the second layer.

[7A] The sealant film for a laminate according to any of [1A] to [6A], wherein a thickness of the sealant film is 30 μm or more and 200 μm or less.

[8A] A laminate for use in a packaging material,
the laminate including at least a first base material and a sealant layer, wherein:

the sealant layer is formed of the sealant film for a laminate according to any one of [1A] to [7A]; and

a percentage of polypropylene relative to a total amount of resin materials is 80% by mass or more.

[9A] The laminate according to [8A], further including a second base material between the first base material and the sealant layer.

[10A] A packaging container including the laminate according to [8A] or [9A].

[11A] The packaging container according to [10A], which is a pouch for holding heat-sterilized food.

EXAMPLES

[EXAMPLE 1]

<Sealant Films for Laminates>

(Sealant Film 1)

In accordance with the compositions of materials specified below, resin composition 1, which was for the first layer and contained random PP: 100% by mass, resin composition 2, which was for the second layer and contained block PP: 85% by mass and PE: 15% by mass, and resin composition 3, which was for the third layer and contained random PP: 100% by mass, were simultaneously extruded through a multilayer die, whereby an unstretched multilayer film in which the thicknesses of the first layer/the second layer/the third layer were 5 $\mu$m/50 $\mu$m/5 $\mu$m (hereinafter "sealant film 1") was obtained.

[Polypropylene]

- Block PP: A propylene-ethylene block copolymer (polymer portion formed of homo-PP (a), 80%; polymer portion formed of ethylene-propylene rubber (EPR) (b), 20%; MFR, 2.3 g/10 minutes)

- Random PP: A propylene-ethylene random copolymer (MFR, 6 g/10 minutes; density, 0.890 g/cm$^3$)

[Polyethylene]

- PE: Linear low-density polyethylene (MFR, 2.0 g/10 minutes; density, 0.919 g/cm$^3$)

[Thermoplastic Elastomer]

- Elastomer: A propylene-a olefin copolymer (melting point, 98°C; MFR (190°C), 3.0 g/10 minutes; MFR (230°C), 7.0 g/10 minutes)

(Sealant Film 2)

In accordance with the compositions of materials specified above, resin composition 1, which was for the first layer and contained random PP: 100% by mass, resin composition 2', which was for the second layer and contained block PP: 92.2% by mass and PE: 7.8% by mass, and resin composition 3, which was for the third layer and contained random PP: 100% by mass, were simultaneously extruded through a multilayer die, whereby an unstretched multilayer film in which the thicknesses of the first layer/the second layer/the third layer were 5 $\mu$m/50 $\mu$m/5 $\mu$m (hereinafter "sealant film 2") was obtained.

(Sealant Film 3)

In accordance with the compositions of materials specified above, a resin composition containing block PP: 73% and 27% PE was extruded, whereby an unstretched single-layer film having a thickness of 60 $\mu$m was obtained.

(Sealant Film 4)

In accordance with the compositions of materials specified above, a resin composition containing block PP: 55%, PE: 35%, and the elastomer: 10% was extruded, whereby an unstretched single-layer film having a thickness of 60 $\mu$m was obtained.

(Sealant Film 5)

In accordance with the compositions of materials specified above, a resin composition containing block PP: 53%, PE: 33%, and the elastomer: 14% was extruded, whereby an unstretched single-layer film having a thickness of 60 $\mu$m was obtained.

(Sealant Film 6)

In accordance with the compositions of materials specified above, a resin composition containing block PP: 30%, PE: 50%, and the elastomer: 20% was extruded, whereby an unstretched single-layer film having a thickness of 60 $\mu$m was obtained.

(Sealant Film 7)

ZK99S (thickness, 60 $\mu$m), manufactured by Toray Advanced Film Co., Ltd., was used.

<Barrier Base Material>

By diluting a hydroxyl-containing (meth)acrylic resin (number-average molecular weight, 25,000; glass transition temperature, 99°C; hydroxyl number, 80 mg KOH/g) using a solvent mixture of methyl ethyl ketone and ethyl acetate (mix ratio, 1:1) to a solids concentration of 10% by mass, a base ingredient was prepared. An ethyl acetate solution containing tolylene diisocyanate (solids content, 75% by mass) was added as a curing agent to the base ingredient, yielding a solution for the formation of a surface coating layer. The amount of curing agent used was 10 parts by mass per 100 parts by mass of the base ingredient.
A 20-$\mu$m thick biaxially oriented polypropylene film with one surface corona-treated (ME-1, manufactured by Mitsui Chemicals Tohcello, Inc.) was prepared. The solution for the formation of a surface coating layer described above was applied to the corona-treated surface of this film and dried, whereby a 0.5-$\mu$m thick surface coating layer was formed. In this manner, a resin base material was obtained.
On the surface coating layer of the resin base material, a 12-nm thick carbon-containing silicon oxide (silica) deposition film was formed using a low-temperature plasma chemical vapor deposition system that had been in practical operation (CVD), with tension applied to the resin base material by the roll-to-roll method. The conditions for the formation of the vapor deposition film were as follows.

(Formation Conditions)

- Hexamethyldisiloxane:oxygen gas:helium = 1:10:10 (unit: slm)

- Power supplied to the cooling/electrode drum: 22 kW

- Line velocity: 100 m/min

By mixing 385 g of water, 67 g of isopropyl alcohol, and 9.1 g of 0.5 N hydrochloric acid, a solution having a pH of 2.2 was obtained. Into this solution, 175 g of tetraethoxysilane as a metal alkoxide and 9.2 g of glycidoxypropyltrimethoxysilane as a silane coupling agent were mixed with cooling to 10°C, yielding solution A. By mixing 14.7 g of polyvinyl alcohol having a degree of saponification of 99% or more and a degree of polymerization of 2400 as a water-soluble polymer, 324 g of water, and 17 g of isopropyl alcohol, solution B was obtained.
Solution A and solution B were mixed such that the ratio therebetween was 6.5:3.5 on a mass basis (solution A:solution B), yielding a barrier coating agent. The vapor deposition film formed on the resin base material was coated with the barrier coating agent by spin coating, and the coating was subjected to 60 seconds of heating treatment at 80°C in an oven, whereby a 300-nm thick barrier coating layer was formed.

In this manner, a barrier base material was obtained.

<Production of a Laminate>

As a first base material, a 20-$\mu$m thick biaxially oriented polypropylene film with one surface corona-treated (ME-1, manufactured by Mitsui Chemicals Tohcello, Inc.) was prepared. On the corona-treated surface of the first base material, a printed layer having a coating thickness of 1 $\mu$m (after drying) was formed by gravure roll coating. Then the printed layer was coated with a two-component polyurethane adhesive (RU-004/H-1, manufactured by Rock Paint Co., Ltd.) by gravure roll coating with a coating thickness of 4 $\mu$m (after drying), and the barrier base material was dry-laminated to the workpiece such that the surface of the barrier coating layer of the base material was in contact with the surface of the bonding layer.

As a second base material (intermediate base material), the barrier base material was subjected to corona treatment on its surface farther away from the barrier coating layer. The treated surface was coated with a two-component polyurethane adhesive (RU-004/H-1, manufactured by Rock Paint Co., Ltd.) by gravure roll coating with a coating thickness of 3.5 $\mu$m (after drying), and sealant film 1 positioned such that its third layer faced the surface of the bonding layer was dry-laminated to the workpiece.

In such a manner, an approximately 109-$\mu$m thick laminate was obtained. The structure of the laminate is: biaxially oriented polypropylene film (20 $\mu$m)/printed layer (1 $\mu$m)/solvent-based bonding layer (4 $\mu$m)/barrier base material (approximately 20 $\mu$m)/solvent-based bonding layer (3.5 $\mu$m)/sealant film 1 (60 $\mu$m). The percentage mono-materialization of the laminate was approximately 91% by mass.

[EXAMPLE 2]

An approximately 109-$\mu$m thick laminate was obtained in the same manner as in Example 1, except that sealant film 2 was used instead of sealant film 1. The structure of the laminate is: biaxially oriented polypropylene film (20 $\mu$m)/printed layer (1 $\mu$m)/solvent-based bonding layer (4 $\mu$m)/barrier base material (approximately 20 $\mu$m)/solvent-based bonding layer (3.5 $\mu$m)/sealant film 2 (60 $\mu$m). The percentage monomaterialization of the laminate was approximately 91% by mass.

[EXAMPLES 3 to 5]

Approximately 109-$\mu$m thick laminates were obtained in the same manner as in Example 1, except that sealant films 3 to 5, which were single-layer, were used instead of sealant film 1. The structure of the laminate is: biaxially oriented polypropylene film (20 $\mu$m)/printed layer (1 $\mu$m)/solvent-based bonding layer (4 $\mu$m)/barrier base material (approximately 20 $\mu$m)/solvent-based bonding layer (3.5 $\mu$m)/sealant films 3 to 5 (60 $\mu$m). The percentage monomaterialization of the laminate was approximately 91% by mass.

[COMPARATIVE EXAMPLES 1 and 2]

Approximately 109-$\mu$m thick laminates were obtained in the same manner as in Example 1, except that sealant films 6 and 7, which were single-layer, were used instead of sealant film 1. The structure of the laminate is: biaxially oriented polypropylene film (20 $\mu$m)/printed layer (1 $\mu$m)/solvent-based bonding layer (4 $\mu$m)/barrier base material (approximately 20 $\mu$m)/solvent-based bonding layer (3.5 $\mu$m)/sealantfilms 6 and 7 (60 $\mu$m). The percentage monomaterialization of the laminate was approximately 91% by mass.

[Composition Analysis of Sealant Films]

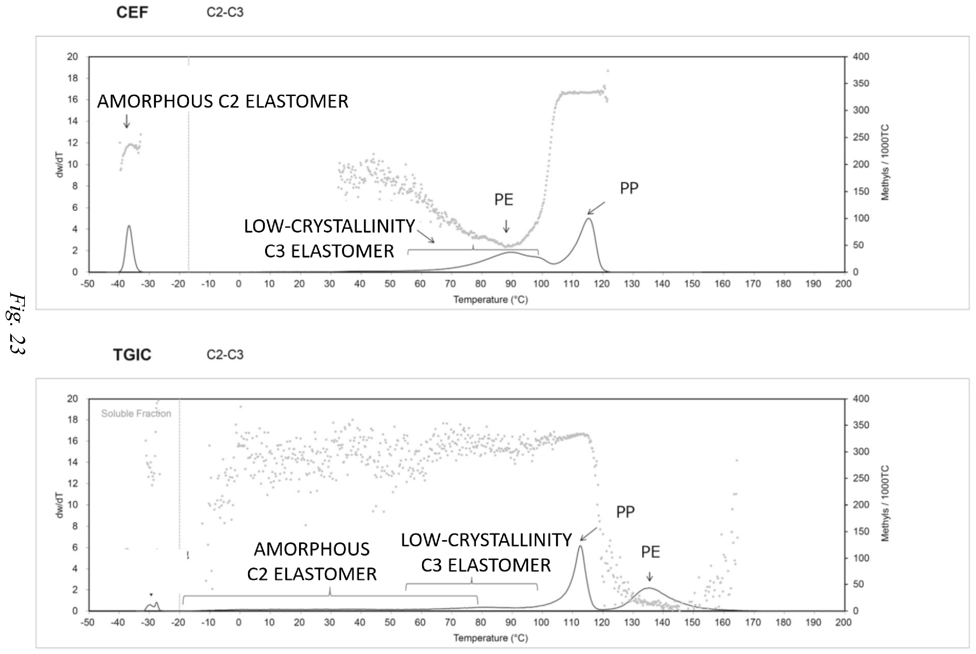

For the prepared sealant films 1 to 7, CEF analysis and TGIC analysis were performed under the conditions specified below using a composition analyzer, through which the percentages of components were calculated. The analytical results are presented in Table 1. The measurement results for sealant film 4, furthermore, are presented in Fig. 23.

(Composition Analyzer)

- Analyzer: A high-throughput composition distribution analyzer, CEF (Polymer Characterization, S.A.)

- Detector (built-in): An IR5 MCT infrared detector (Polymer Characterization, S.A.)

- Detection wavelengths: Methylene sensor, $CH_2$ va 3.42 $\mu$m (2,920 cm$^{-1}$); concentration Methyl sensor, $CH_3$ va 3.38 $\mu$m (2,960 cm$^{-1}$); composition

(CEF Analysis)

- Column: A CEF column (Polymer Characterization, S.A.); length, 150 mm; capacity, 2.6 mL

- Mobile phase: o-dichlorobenzene (ODCB), BHT added

- Sample concentration: 16 mg/8 mL

- Dissolution conditions: 150°C, 60 min (in a $N_2$ atmosphere)

- Sample filtration: A 10-$\mu$m in-line filter

- Injection volume: 0.2 mL

- Temperature lowering conditions: 95°C $\rightarrow$ -17°C, 1.0°C/min; flow rate, 0.012 mL/min

- Temperature elevation conditions: -17°C $\rightarrow$ 140°C, 4.0°C/min; flow rate, 1.0 mL/min

(TGIC Analysis)

- Column: A porous graphite carbon column, Hypercarb high-temperature (Thermo Fisher Scientific Inc.); inner diameter, 4.6 mm; length, 100 mm; particle diameter, 5 $\mu$m

- Mobile phase: o-dichlorobenzene (ODCB), BHT added

- Sample concentration: 15 mg/20 mL

- Dissolution conditions: 145°C, 120 min

- Sample filtration: A 1.0-$\mu$m sintered filter

- Injection volume: 0.2 mL

- Temperature lowering conditions: 140°C $\rightarrow$ -20°C, 2.0°C/min; flow rate, 0.0 mL/min

- Temperature elevation conditions: -20°C $\rightarrow$ 165°C, 2.0°C/min; flow rate, 0.5 mL/min

[Composite Modulus of Elasticity of Sealant Films]

The composite modulus of elasticity ($E_r$) of the sealant films (sealant layers) was determined based on the nanoindentation method, with a cross-section of the sealant layers as the measurement surface using a nanoindenter ("TI950 TriboIndenter," manufactured by Bruker Corporation). For the tip of the nanoindenter, a Berkovich tip (three-sided pyramidal tip; Berkovich_TI0039) was used for the measurement. The measurement was conducted at five or more points at each measurement location (location where the indenter was pressed) on the same cross-section, and the composite modulus of elasticity $E_r$ was reported for each individual measurement location as the arithmetic mean of values from five points measured.

The cross-section is obtained by folding the produced laminate into a V-shape such that its sealant film side is positioned inside, heat-sealing the folded laminate to a width of 130 mm and a height of 165 mm, thereby producing a bag-shaped pouch, filling the resulting pouch with 100 mL of water through its opening, hermetically sealing the opening by heat sealing, subjecting the sealed pouch to hot-water retort sterilization treatment at a retort temperature of 121°C for a retort duration of 30 minutes, and cutting the sterilized pouch in the direction along the thickness of the laminate. The creation of the cross-section was conducted by preparing a block in which the laminate was embedded in embedding resin and cutting the block in a room-temperature (23°C) environment using a commercially available rotary microtome. The finishing was conducted using a diamond knife.

The locations where the indenter was pressed were three locations in the portion in which the cross-section of the sealant layer was exposed: 2 $\mu$m inward from the interface with the adhesive agent layer (upper portion), near the middle (middle portion), and 2 $\mu$m inward from the seal surface (lower portion) in the direction along the thickness of the sealant layer.

For the measurement conditions, the load control method (indentation load, 30 $\mu$N; 3 seconds of loading/5 seconds of retention/3 seconds of unloading) was employed. Specifically, the measurement conditions are as follows. Over 3 seconds, the indenter was pressed into the sealant layer from the cross-section of the sealant layer to an indentation load of 30 $\mu$N, and then held in that state for 5 seconds. After that, the indenter was released over 3 seconds. The maximum load $P_{max}$, the projected contact area at the maximum depth $A_p$, and the load-displacement curve were successfully obtained through this, and the composite modulus of elasticity value was calculated from the load-displacement curve obtained. The measurement was conducted in a room-temperature (23°C) environment. The results are presented in Table 1.

[Evaluation of Impact Resistance]

<Fall Strength>

Laminates obtained as described above were folded into a V-shape such that the surface closer to the sealant film (the first layer) was positioned inside, and heat-sealed to a width of 130 mm and a height of 165 mm, whereby ten bag-shaped pouches were produced.

The resulting pouches were filled with 150 mL of water through their opening, and the opening was hermetically sealed by heat sealing. The sealed pouches were subjected to hot-water retort sterilization treatment at a retort temperature of 121°C for a retort duration of 30 minutes.

The pouches after the retort treatment were dropped from a height of 80 cm to the floor in the horizontal position (such that the trunk of the pouches hit the floor) ten times, and then dropped from a height of 80 cm to the floor in the vertical position (such that the bottom of the pouches hit the floor) ten times. By checking the number of broken pouches out of the ten, impact resistance was evaluated. The results are presented in Table 1.

<Evaluation Criteria>

◎: No broken pouch.

○: There is no broken pouch, but damage is observed at the sealed edges.

(Multilayer configuration) In the damaged area, breakage in the sealant layer was observed, but the core layer was not broken.

(Single-layer configuration) In the damaged area, no breakage in the sealant layer was observed. Of the first base material/second base material/sealant layer interfaces in the laminate, detachment was observed at the second base material/sealant layer interface.

×: Three or more broken pouches.

<Low-Temperature Fall Strength>

Laminates obtained as described above were folded into a V-shape such that the surface closer to the sealant film (the first layer) was positioned inside, and heat-sealed to a width of 130 mm and a height of 165 mm, whereby 30 bag-shaped pouches were produced.

The resulting pouches were filled with 150 mL of water through their opening, and the opening was hermetically sealed by heat sealing. The sealed pouches were subjected to hot-water retort sterilization treatment at a retort temperature of 121°C for a retort duration of 30 minutes.

The pouches after the retort treatment were placed into a refrigerator at 5°C and stored for 1 day.

Pouches removed from the refrigerator were dropped from a height of 80 cm to the floor in the horizontal position (such that the trunk of the pouches hit the floor) ten times, and then dropped from a height of 80 cm to the floor in the vertical position (such that the bottom of the pouches hit the floor) ten times. By checking the number of broken pouches out of the 30, impact resistance was evaluated. The results are presented in Table 1.

<Evaluation Criteria>

◎: The 30 pouches are not broken

○: No pouch is broken, but CPP in fifteen or more pouches is broken (the base material remains unbroken).

△: One to five broken pouches.

×: Fifteen or more broken pouches (not only CPP but also the base material is broken, with water leakage).

[Evaluation of Openability]

Laminates obtained as described above were folded into a V-shape such that the surface closer to the sealant film (the first layer) was positioned inside, and heat-sealed to a width of 130 mm and a height of 165 mm, whereby ten bag-shaped pouches were produced. In this process, the direction corresponding to the direction of flow of the film (MD direction) was aligned with the 130-mm, shorter-side direction.

The resulting pouches were filled with 150 mL of water through their opening, and the opening was hermetically sealed by heat sealing. The sealed pouches were subjected to hot-water retort sterilization treatment at a retort temperature of 121°C for a retort duration of 30 minutes.

The pouches after the retort treatment were opened, starting from a notch created at a position 20 mm inward from an edge in the direction perpendicular to the direction of flow of the film (TD direction), and openability was evaluated. The results are presented in Table 1.

<Evaluation Criteria>

◎: The pouches were completely opened for 130 mm, without notable abnormalities in the opened portion.

○: The pouches were completely opened for 130 mm, but with the opened portion being wavy in certain areas as a result of elongation of the sealant film.

×: Elongation of the CPP prevented complete opening for 130 mm in three or more pouches.

[Table 1]

| Sealant film | | Example 1 | Example 2 | Example 3 | Example 4 | Example 5 | Comparative Example 1 | Comparative Example 2 |
|---|---|---|---|---|---|---|---|---|
| Amount [%] | PP | 83 | 85 | 56 | 42.7 | 40.8 | 24.8 | 85 |
| | EPR | 14.5 | 13.7 | 14.8 | 9.8 | 10.2 | 6.2 | 15 |
| | PE | 2.5 | 1.3 | 29.2 | 37.5 | 35 | 49 | 0 |
| | (EPR+PE) | 17.0 | 15.0 | 44.0 | 47.3 | 55.2 | 55.2 | 15.0 |
| | PP-$\alpha$ | 0 | 0 | 0 | 10 | 14 | 20 | 0 |

(continued)

| Sealant film | | Example 1 | Example 2 | Example 3 | Example 4 | Example 5 | Comparative Example 1 | Comparative Example 2 |
|---|---|---|---|---|---|---|---|---|
| Composite modulus of elasticity [MPa] | Upper portion | 1496.6 | 1747.2 | 815.3 | 691.1 | 501.4 | 498.6 | 902.2 |
| | Middle portion | 847.7 | 831.1 | 815.3 | 691.1 | 501.4 | 498.6 | 902.2 |
| | Lower portion | 1667.2 | 1745.0 | 815.3 | 691.1 | 501.4 | 498.6 | 902.2 |
| Fall strength | | ○ | ○ | ○ | ◎ | ◎ | ◎ | × |
| Low-temperature fall strength | | Δ | Δ | ○ | ◎ | ◎ | ○ | × |
| Openability | | ◎ | ◎ | ◎ | ◎ | ○ | × | ◎ |

Reference Signs List

1: laminate, 10: polypropylene stretched base material, 20: barrier base material, 22: polypropylene stretched layer: 23: surface coating layer, 24: inorganic oxide layer, 25: coating layer, 26: surface resin layer, 27: adhesive resin layer, 30: sealant layer (sealant film for laminates), 40, 40A, 40B: bonding layer,

50: packaging container, 51: easy-open portion, 52: notch portion, 53: half-cut line,

60: stand-up pouch, 61: trunk (side sheet), 62: bottom (bottom sheet), 63: steam vent mechanism, 63a: steam vent seal portion, 63b: unsealed portion

**Claims**

1. A sealant film for a laminate, the sealant film being for use in a laminate in which a percentage of polypropylene relative to a total amount of resin materials is 80% by mass or more,
the sealant film comprising polypropylene, polyethylene, and ethylene-propylene rubber, wherein:

   a percentage of the polypropylene relative to a total amount of the sealant film is 40% by mass or more; and
   the sealant film has a composite modulus of elasticity as measured by nanoindentation of 500 MPa or more and 900 MPa or less.

2. The sealant film for a laminate according to claim 1, wherein a percentage of the polyethylene relative to the total amount of the sealant film is 25% by mass or more and 40% by mass or less.

3. The sealant film for a laminate according to claim 1, wherein a percentage of the ethylene-propylene rubber relative to the total amount of the sealant film is 5% by mass or more and 15% by mass or less.

4. The sealant film for a laminate according to claim 1, wherein the sealant film contains a propylene-ethylene elastomer or an ethylene-a olefin elastomer.

5. The sealant film for a laminate according to claim 1, wherein the sealant film includes at least a first layer that, when the sealant film is used in the laminate, is positioned at one of two surfaces of the laminate and a second layer in contact with the first layer.

6. The sealant film for a laminate according to claim 5, the sealant film further comprising a third layer in contact with the second layer.

7. The sealant film for a laminate according to claim 1, wherein a thickness of the sealant film is 30 $\mu$m or more and 200 $\mu$m or less.

8. A laminate for use in a packaging material,
   the laminate comprising one or more base materials and a sealant layer, wherein:

   the sealant layer is formed of the sealant film for a laminate according to any one of claims 1 to 7; and
   a percentage of polypropylene relative to a total amount of resin materials is 80% by mass or more.

9. A packaging container comprising the laminate according to claim 8.

10. The packaging container according to claim 9, which is a pouch for holding heat-sterilized food.

11. A heat sterilization pouch comprising:

   the packaging container according to claim 10; and
   heat-sterilized food held in the packaging container.

*Fig. 1*

*Fig. 2*

*Fig. 3*

Fig. 4

Fig. 5

Fig. 6

Fig. 7

Fig. 8

Fig. 9

*Fig. 10*

*Fig. 11*

*Fig. 12*

*Fig. 13*

*Fig. 14*

*Fig. 15*

*Fig. 16*

*Fig. 17*

Fig. 18

Fig. 19

Fig. 20

Fig. 21

*Fig. 22*

*Fig. 23*

## INTERNATIONAL SEARCH REPORT

| International application No. |
| --- |
| **PCT/JP2024/034534** |

**A. CLASSIFICATION OF SUBJECT MATTER**

*B32B 27/32*(2006.01)i; *B32B 27/00*(2006.01)i; *B65D 33/00*(2006.01)i; *B65D 65/40*(2006.01)i; *C08J 7/043*(2020.01)i; *C08L 23/06*(2006.01)i; *C08L 23/16*(2006.01)i
FI: B32B27/32 E; B32B27/00 H; B65D65/40 D; B32B27/32 103; B65D33/00 C; B32B27/32 102; C08L23/06; C08L23/16; C08J7/043 CES

According to International Patent Classification (IPC) or to both national classification and IPC

**B. FIELDS SEARCHED**

Minimum documentation searched (classification system followed by classification symbols)

B32B27/32; B32B27/00; B65D33/00; B65D65/40; C08J7/043; C08L23/06; C08L23/16

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2020-200392 A (TOPPAN PRINTING CO., LTD.) 17 December 2020 (2020-12-17) claims, paragraphs [0023]-[0045], [0056]-[0058], examples | 1, 3-8, 10-11 |
| A | | 2 |
| X | JP 2023-97273 A (DAI NIPPON PRINTING CO., LTD.) 07 July 2023 (2023-07-07) claims, paragraphs [0091]-[0138], [0164]-[0183], examples, drawings | 1, 3-11 |
| A | | 2 |

☐ Further documents are listed in the continuation of Box C.   ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **03 December 2024** | **17 December 2024** |

| Name and mailing address of the ISA/JP | Authorized officer |
| --- | --- |
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

**INTERNATIONAL SEARCH REPORT**
Information on patent family members

International application No.

**PCT/JP2024/034534**

| Patent document cited in search report | | | Publication date (day/month/year) | Patent family member(s) | Publication date (day/month/year) |
|---|---|---|---|---|---|
| JP | 2020-200392 | A | 17 December 2020 | (Family: none) | |
| JP | 2023-97273 | A | 07 July 2023 | (Family: none) | |

Form PCT/ISA/210 (patent family annex) (July 2022)

**EP 4 778 722 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2023166474 A
- JP 2023167754 A
- JP 2023186013 A
- JP 2021020391 A